# EUROPEAN PATENT APPLICATION

(11) **EP 4 421 627 A1**
(43) Date of publication of application: **28.08.2024**
(21) Application number: 22909787.8
(22) Date of filing: 09.12.2022
(51) Int. Cl.: G06F 9/451

(54) **METHOD FOR RECEIVING AND SENDING RED ENVELOPE, AND ELECTRONIC DEVICE**

(30) Priority: 20.12.2021 CN 202111559958
(71) Applicant: Huawei Technologies Co., Ltd., Shenzhen, Guangdong 518129 (CN)
(72) Inventor: WANG, Yilun, Shenzhen, Guangdong 518129 (CN); HU, Kai, Shenzhen, Guangdong 518129 (CN); ZHANG, Li, Shenzhen, Guangdong 518129 (CN); YU, Yang, Shenzhen, Guangdong 518129 (CN); WEI, Yuanyou, Shenzhen, Guangdong 518129 (CN)
(74) Representative: Thun, Clemens
(86) International application number: PCT/CN2022/138048
(87) International publication number: WO 2023/116472

(57) **Abstract**

This application provides a red packet receiving and sending method and an electronic device. The method is applied to the electronic device, and the method includes: displaying a first interface, where the first interface is a call screen; displaying first prompt information on the first interface in response to receiving information about a first red packet, where the first prompt information is used to prompt a user to open the first red packet; and displaying opening detail information of the first red packet on the first interface in response to an input of the user for the first prompt information. In embodiments of this application, during a call, the user may complete receiving/sending a red packet on a current call screen. Red packet information displayed on the call screen makes it convenient for the user to receive/send the red packet, and helps improve user experience of receiving/sending the red packet during the call.

## Description

This application claims priority to Chinese Patent Application No. 202111559958.0, filed with the China National Intellectual Property Administration on December 20, 2021, and entitled "RED PACKET RECEIVING AND SENDING METHOD AND ELECTRONIC DEVICE", which is incorporated herein by reference in its entirety.

### TECHNICAL FIELD

This application relates to the field of electronic devices, and more specifically, to a red packet receiving and sending method and an electronic device.

### BACKGROUND

Red packet receiving and sending are increasingly common and frequently used in life of a user. In the conventional technology, a plurality of red packet types are innovated, to enhance user experience of receiving/sending a red packet and improve interest of receiving/sending the red packet. However, information about receiving/sending the red packet is mostly displayed in a text message, and a red packet receiving and sending form is simple, resulting in poor user experience.

### SUMMARY

This application provides a red packet receiving and sending method and an electronic device. According to the method, information about receiving/sending a red packet is displayed on a call screen, so that a user can receive/send the red packet in real time during a call, thereby improving user experience.

According to a first aspect, a red packet receiving and sending method is provided, where the method is applied to an electronic device, and the method includes: displaying a first interface, where the first interface is a call screen; displaying first prompt information on the first interface in response to receiving information about a first red packet, where the first prompt information is used to prompt a user to open the first red packet; and displaying opening detail information of the first red packet on the first interface in response to an input of the user for the first prompt information.

It should be understood that the information about the first red packet may be a red packet message delivered by a server to the electronic device, and the information about the first red packet includes one or more of logged-in account information (for example, a Huawei account) on a transmit end device, a red packet amount, a quantity of divided red packets, and a red packet blessing. The electronic device may receive information about one or more first red packets.

Optionally, the electronic device may further display prompt information on the call screen in response to sending the information about the first red packet, in other words, may be configured to implement a red packet sending operation on the call screen of the electronic device. The prompt information is used to prompt the user to send a red packet.

In embodiments of this application, during the call, the user may complete receiving/sending the red packet on a current call screen. Red packet information displayed on the call screen makes it convenient for the user to receive/send the red packet, and helps improve user experience of receiving/sending the red packet during the call.

With reference to the first aspect, in some implementations of the first aspect, the first prompt information includes a red packet opening window, and the red packet opening window includes a red packet opening control; and the displaying opening detail information of the first red packet on the first interface in response to an input of the user for the first prompt information includes: displaying the opening detail information of the first red packet on the first interface in response to an input of the user for the red packet opening control.

In embodiments of this application, the first prompt information may be displayed on the call screen in a form of the red packet opening window. The user taps the red packet opening control on the red packet opening window to open the red packet, so that the user can efficiently open the red packet on the call screen.

With reference to the first aspect, in some implementations of the first aspect, before the displaying first prompt information on the first interface, the method further includes: displaying a red packet icon on the first interface in response to receiving the information about the first red packet; and displaying the red packet opening window on the first interface in response to an input of the user for the red packet icon.

In embodiments of this application, after receiving the information about the first red packet, the electronic device may first display the red packet icon on the call screen. The red packet icon is a minimized red packet opening window, and may be located in a lower right corner of the call screen, to prevent the user call screen from being blocked by the red packet opening window. When the user wants to open the red packet, the user may tap the red packet icon to restore the red packet window and open the red packet as required.

With reference to the first aspect, in some implementations of the first aspect, the displaying a red packet icon on the first interface in response to receiving the information about the first red packet includes: displaying the red packet opening window on the first interface in response to receiving the information about the first red packet, where the red packet opening window includes a window closing control; and displaying the red packet icon on the first interface in response to an input of the user for the window closing control.

In embodiments of this application, after receiving the information about the first red packet, the electronic device may first display the red packet opening window on the call screen. Optionally, the user may tap the window closing control on the opening window or tap a blank area on the call screen to obtain the red packet icon. In other words, the user may minimize the red packet opening window as required to prevent the call screen from being blocked.

With reference to the first aspect, in some implementations of the first aspect, the first prompt information includes a bullet comment; and the displaying opening detail information of the first red packet on the first interface in response to an input of the user for the first prompt information includes: displaying the opening detail information of the first red packet on the first interface in response to an input of the user for the bullet comment.

It should be understood that the bullet comment includes a bullet comment for a red packet that can be opened, and further includes a bullet comment for opening detail information of a red packet. The bullet comment for the red packet that can be opened may be periodically displayed on the call screen in a scrolling manner. After the red packet is opened, the bullet comment disappears. The opening detail information of the red packet may be repeatedly displayed once, may be displayed once, or may be displayed more times.

In embodiments of this application, the first prompt information may be displayed on the call screen in a form of the bullet comment. The user taps the bullet comment to open the red packet, so that the user can efficiently open the red packet on the call screen.

With reference to the first aspect, in some implementations of the first aspect, the first interface includes a minimize control, and the method further includes: displaying second prompt information on the first interface in response to receiving information about a second red packet, where the second prompt information is used to prompt the user to open the second red packet; displaying a floating window of the first interface and third prompt information on a second interface in response to an input of the user for the minimize control, where the second interface is a text message interface, and the third prompt information is used to prompt the user to open the second red packet; and displaying opening detail information of the second red packet on the second interface and the floating window in response to an input of the user for the second prompt information or the third prompt information.

Optionally, the user may first tap the minimize control to minimize the first interface to the floating window. After receiving the information about the second red packet, the electronic device displays prompt information of the second red packet on both the second interface and the floating window of the first interface. The prompt information may prompt the user to open the red packet on the second interface or the floating window.

In embodiments of this application, after the user minimizes the first interface, corresponding prompt information may be synchronously displayed on the first interface and the second interface. The user may open the red packet on the first interface or the second interface, and opening detail information after the red packet is opened may also be synchronously displayed on the first interface and the second interface. This helps improve user experience of receiving/sending the red packet.

With reference to the first aspect, in some implementations of the first aspect, the method further includes: The electronic device sends, in response to receiving the information about the first red packet, fourth prompt information to a device associated with the electronic device, where the fourth prompt information indicates that the electronic device receives the information about the red packet.

In embodiments of this application, the device associated with the electronic device may be a device on which a same account as the electronic device is logged in. After the electronic device receives the information about the red packet, the electronic device forwards the information about the red packet to the associated device, so that the associated device may also display prompt information. In this way, an electronic device that displays the prompt information is added, and the user may select an electronic device for opening the red packet based on a specific requirement, thereby making it convenient for the user to open the red packet.

With reference to the first aspect, in some implementations of the first aspect, the opening detail information of the first red packet includes opening detail information of the first red packet by a first account, and the first account is a logged-in account on the electronic device.

In embodiments of this application, the user opens the red packet on an electronic device on which an account (the first account) of the user is logged in, and opening detail information of the red packet is directly displayed on the call screen of the electronic device, so that the user obtains, on the call screen, opening detail information of the red packet by the account of the user.

With reference to the first aspect, in some implementations of the first aspect, the method further includes: displaying fifth prompt information on the first interface, where the fifth prompt information indicates opening detail information of the first red packet by a second account, and the second account is a logged-in account on another electronic device on which the first red packet is opened.

In embodiments of this application, a user of the first account sends a red packet to a user of the second account. After the user of the second account opens the red packet on an electronic device of the user of the second account, an electronic device of the user of the first account displays the fifth prompt information, indicating that the red packet has been opened by the user of the second account. This improves user experience of receiving/sending the red packet.

With reference to the first aspect, in some implementations of the first aspect, the method further includes: displaying sixth prompt information on the first interface, where the sixth prompt information indicates information about an account with a highest opened amount of the first red packet.

In embodiments of this application, the sixth prompt information may be information that is used to prompt an account with a highest opened amount of a red packet, for example, a special effect icon "Luck king". The sixth prompt information is not only displayed on the electronic device of the first account, but also may be displayed on an electronic device of another account that is in a call with the first account. This enhances interest of receiving/sending the red packet by the user.

With reference to the first aspect, in some implementations of the first aspect, the opening detail information of the first red packet includes information about an opened amount of the first red packet.

In embodiments of this application, the opening detail information of the red packet includes the information about the opened amount, so that the user can obtain the information about the opened amount of the red packet on the call screen.

According to a second aspect, an electronic device is provided, where the electronic device includes one or more processors and one or more memories, the one or more memories store one or more computer programs, the one or more computer programs include instructions, and when the instructions are executed by the one or more processors, the electronic device performs the following steps: displaying a first interface, where the first interface is a call screen; displaying first prompt information on the first interface in response to receiving information about a first red packet, where the first prompt information is used to prompt a user to open the first red packet; and displaying opening detail information of the first red packet on the first interface in response to an input of the user for the first prompt information.

With reference to the second aspect, in some implementations of the second aspect, the first prompt information includes a red packet opening window, and the red packet opening window includes a red packet opening control; and when the instructions are executed by the one or more processors, the electronic device is enabled to perform the following step: displaying the opening detail information of the first red packet on the first interface in response to an input of the user for the red packet opening control.

With reference to the second aspect, in some implementations of the second aspect, when the instructions are executed by the one or more processors, the electronic device is enabled to perform the following steps: before displaying a red packet icon on the first interface, displaying a red packet icon on the first interface in response to receiving the information about the first red packet; and displaying the red packet opening window on the first interface in response to an input of the user for the red packet icon.

With reference to the second aspect, in some implementations of the second aspect, the displaying a red packet icon on the first interface in response to receiving the information about the first red packet, and when the instructions are executed by the one or more processors, the electronic device is enabled to perform the following steps: displaying the red packet opening window on the first interface in response to receiving the information about the first red packet, where the red packet opening window includes a window closing control; and displaying the red packet icon on the first interface in response to an input of the user for the window closing control.

With reference to the second aspect, in some implementations of the second aspect, the first prompt information includes a red bullet comment, and when the instructions are executed by the one or more processors, the electronic device is enabled to perform the following step: displaying the opening detail information of the first red packet on the first interface in response to an input of the user for the bullet comment.

With reference to the second aspect, in some implementations of the second aspect, the first interface includes a minimize control, and when the instructions are executed by the one or more processors, the electronic device is enabled to perform the following steps: displaying second prompt information on the first interface in response to receiving information about a second red packet, where the second prompt information is used to prompt the user to open the second red packet; displaying a floating window of the first interface and third prompt information on a second interface in response to an input of the user for the minimize control, where the second interface is a text message interface, and the third prompt information is used to prompt the user to open the second red packet; and displaying opening detail information of the second red packet on the second interface and the floating window in response to an input of the user for the second prompt information or the third prompt information.

With reference to the second aspect, in some implementations of the second aspect, when the instructions are executed by the one or more processors, the electronic device is enabled to perform the following step: sending, in response to receiving the information about the first red packet, fourth prompt information to a device associated with the electronic device, where the fourth prompt information indicates that the electronic device receives the information about the red packet.

With reference to the second aspect, in some implementations of the second aspect, the opening detail information of the first red packet includes opening detail information of the first red packet by a first account, and the first account is a logged-in account on the electronic device.

With reference to the second aspect, in some implementations of the second aspect, when the instructions are executed by the one or more processors, the electronic device is enabled to perform the following step: displaying fifth prompt information on the first interface, where the fifth prompt information indicates opening detail information of the first red packet by a second account, and the second account is a logged-in account on another electronic device on which the first red packet is opened.

With reference to the second aspect, in some implementations of the second aspect, when the instructions are executed by the one or more processors, the electronic device is enabled to perform the following step: displaying sixth prompt information on the first interface, where the sixth prompt information indicates information about an account with a highest opened amount of the first red packet.

With reference to the second aspect, in some implementations of the second aspect, the opening detail information of the first red packet includes information about an opened amount of the first red packet.

According to a third aspect, a computer-readable storage medium is provided, including computer instructions. When the computer instructions are run on an electronic device, the electronic device is enabled to perform the red packet receiving and sending method according to the first aspect or any one of the possible implementations of the first aspect.

According to a fourth aspect, a computer program product including instructions is provided. When the computer program product runs on a computer, the computer is enabled to perform the red packet receiving and sending method according to the first aspect or any one of the possible implementations of the first aspect.

### BRIEF DESCRIPTION OF DRAWINGS

FIG. 1 is a schematic diagram of a structure of an electronic device according to an embodiment of this application;
FIG. 2 is a schematic diagram of an architecture of a system according to an embodiment of this application;
FIG. 3 is a schematic flowchart of a red packet receiving and sending method according to an embodiment of this application;
FIG. 4(a) to FIG. 4(g) are a group of GUIs according to an embodiment of this application;
FIG. 5(a) to FIG. 5(c) are another group of GUIs according to an embodiment of this application;
FIG. 6(a) to FIG. 6(c) are another group of GUIs according to an embodiment of this application;
FIG. 7(a) to FIG. 7(f) are another group of GUIs according to an embodiment of this application;
FIG. 8(a) to FIG. 8(h) are another group of GUIs according to an embodiment of this application;
FIG. 9(a) to FIG. 9(d) are another group of GUIs according to an embodiment of this application;
FIG. 10 is a schematic diagram of an architecture of another system according to an embodiment of this application;
FIG. 11 is a schematic flowchart of another red packet receiving and sending method according to an embodiment of this application;
FIG. 12 is a schematic flowchart of another red packet receiving and sending method according to an embodiment of this application;
FIG. 13(a) to FIG. 13(e) are another group of GUIs according to an embodiment of this application;
FIG. 14(a) to FIG. 14(f) are another group of GUIs according to an embodiment of this application;
FIG. 15(a) to FIG. 15(c) are another group of GUIs according to an embodiment of this application;
FIG. 16(a) to FIG. 16(e)-3 are another group of GUIs according to an embodiment of this application; and
FIG. 17 is a schematic flowchart of another red packet receiving and sending method according to an embodiment of this application.

### DESCRIPTION OF EMBODIMENTS

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly. It should be further understood that in the following embodiments of this application, "at least one" and "one or more" refer to one, two, or more. The term "and/or" is for describing an association relationship between associated objects and indicates that three relationships may exist. For example, A and/or B may indicate the following cases: Only A exists, both A and B exist, and only B exists, where A and B each may be singular or plural. A character "/" usually indicates an "or" relationship between the associated objects.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but is not limited to", unless otherwise specifically emphasized.

The following describes an electronic device, a user interface for such an electronic device, and embodiments for using such an electronic device. In some embodiments, the electronic device may be a portable electronic device that further includes other functions like a personal digital assistant function and/or a music player function, for example, a mobile phone, a tablet computer, or a wearable electronic device having a wireless communication function (for example, a smartwatch). An example embodiment of the portable electronic device includes but is not limited to a portable electronic device using iOS^{®}, Android^{®}, Microsoft^{®}, or another operating system. The portable electronic device may alternatively be another portable electronic device, like a laptop (Laptop) computer. It should be further understood that, in some other embodiments, the electronic device may not be the portable electronic device but a desktop computer.

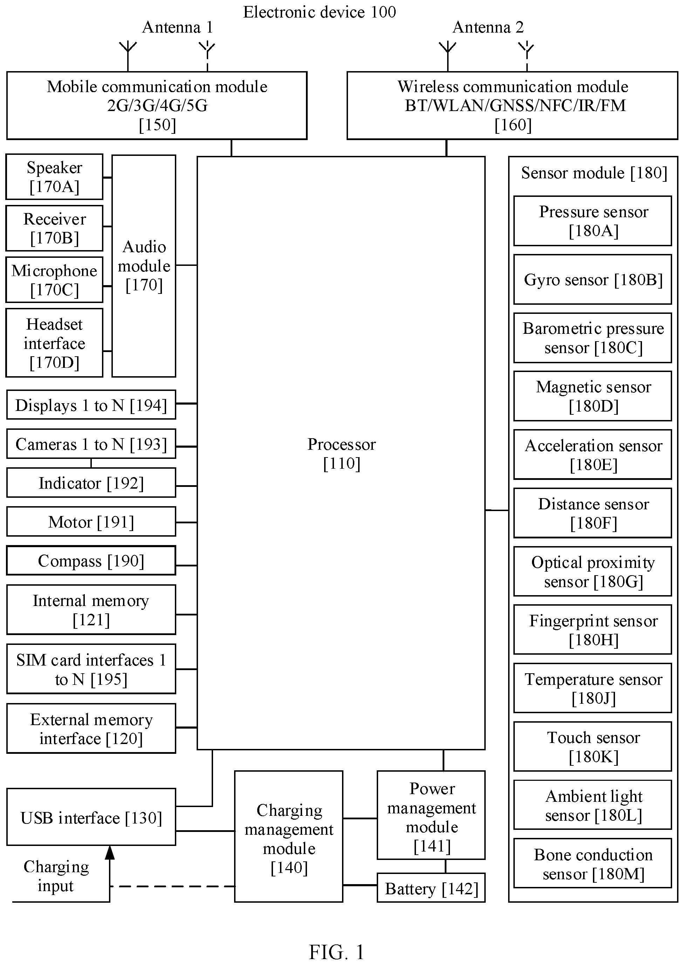

FIG. 1 is an example of a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in an embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may also be multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into the electromagnetic wave for radiation through the antenna 1. In some embodiments, at least some functional modules of the mobile communication module 150 may be disposed in the processor 110. In some embodiments, at least some function modules of the mobile communication module 150 and at least some modules of the processor 110 may be disposed in a same component.

The modem processor may include a modulator and a demodulator. The modulator is configured to modulate a to-be-sent low-frequency baseband signal into a medium-high-frequency signal. The demodulator is configured to demodulate the received electromagnetic wave signal into a low-frequency baseband signal. Then, the demodulator transmits the demodulated low-frequency baseband signal to the baseband processor for processing. The low-frequency baseband signal is processed by the baseband processor and then transferred to the application processor. The application processor outputs a sound signal by using an audio device (not limited to the speaker 170A, the receiver 170B, and the like), or displays an image or a video by using the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives the electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into the electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), the BT, the GNSS, the WLAN, the NFC, the FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display the image, the video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, light is transferred to a camera photosensitive element through a lens, an optical signal is converted into an electrical signal, and the camera photosensitive element transmits the electrical signal to the ISP for processing, to convert the electrical signal into an image visible to a naked eye. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform or the like on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

An NPU is a neural-network (neural-network, NN) computing processor, quickly processes input information by drawing on a structure of a biological neural network, for example, by drawing on a transmission mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external memory card, for example, a micro SD card, to expand a storage capability of the electronic device 100. The external memory card communicates with the processor 110 through the external memory interface 120, to implement a data storage function, for example, store files such as music and a video in the external memory card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash storage device, or a universal flash storage (universal flash storage, UFS).

The electronic device 100 may implement audio functions such as music playing and recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, to implement a directional recording function and the like.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, like a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed on a same touch location but have different touch operation intensity may correspond to different operation instructions. For example, when a touch operation whose touch operation intensity is greater than or equal to a first pressure threshold is performed on an alarm clock application icon, an instruction for creating an alarm clock is performed.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like. For example, when a mobile phone detects a touch operation of a user on a lock screen, the mobile phone may collect fingerprint information of the user by using the fingerprint sensor 180H, and match the collected fingerprint information with fingerprint information preset in the mobile phone. If matching succeeds, the mobile phone may enter a non-lock screen from the lock screen.

The touch sensor 180K is also referred to as a "touch panel". The touch sensor 180K may be disposed on the display 194, and a touchscreen, also referred to as a "touch screen", is formed by the touch sensor 180K and the display 194. The touch sensor 180K is configured to detect a touch operation performed on or near the touch sensor 180K. The touch sensor may transfer the detected touch operation to the application processor to determine a type of a touch event. A visual output related to the touch operation may be provided through the display 194. In some other embodiments, the touch sensor 180K may also be disposed on a surface of the electronic device 100 at a location different from that of the display 194.

A red packet receiving and sending function of an electronic device is increasingly commonly used in life of a user, and is frequently used. The function often occurs in a scenario of social communication between users, and mainly relates to a connection between people. For example, when an electronic device of the user receives a red packet message, the user may perform an operation of opening a red packet in a text message. However, with social development, communication between users is not limited to a text message manner, and the user increasingly widely uses an audio and video call function on the electronic device. When the electronic device is in an audio and video call screen, the user needs to exit or minimize the current audio and video call screen, and perform a red packet receiving and sending operation on a text message interface. In the conventional technology, the user cannot directly perform the red packet receiving and sending operation on the audio and video call screen. In addition, to increase interest of receiving/sending the red packet, there are a plurality of innovative red packet types, for example, a random-amount red packet, a dedicated red packet, and a specific-amount red packet on a holiday. However, existing innovative red packet types focus on the connection between people. This application may further provide a cross-device red packet receiving and sending manner focusing on devices, to provide experience of the red packet on a plurality of devices.

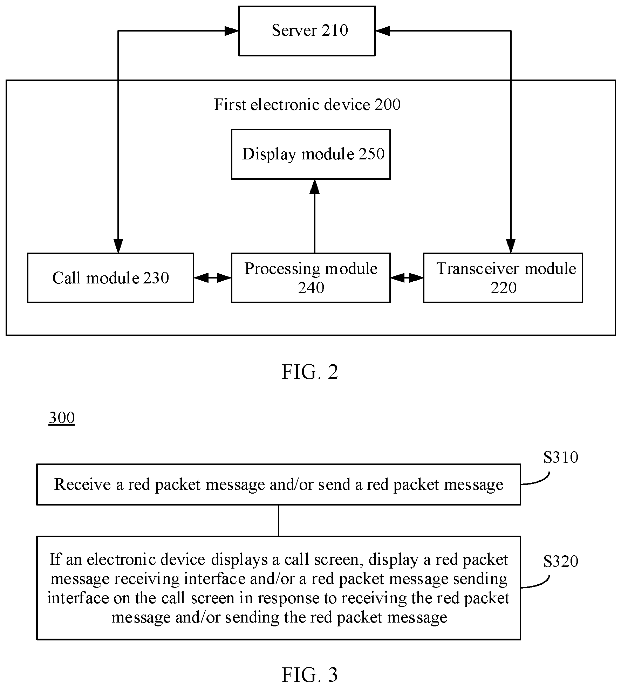

FIG. 2 is a schematic diagram of an architecture of a system to which a technical solution is applied according to an embodiment of this application. The system includes a first electronic device 200 and a server 210. The first electronic device 200 may include a transceiver module 220, a call module 230, a processing module 240, and a display module 250.

It should be understood that a quantity or a type of first electronic devices is not limited in the architecture of the system shown in FIG. 2. The architecture of the system may include one or more first electronic devices that can independently complete red packet receiving and sending processing, for example, electronic devices such as a mobile phone, a tablet computer, a smart screen, or a smartwatch.

The architecture of the system further includes the server 210. The transceiver module 220 and the call module 230 in the first electronic device 200 may establish a network connection to the server 210. The transceiver module 220 and the call module 230 may send an event message to the processing module 240. The processing module 240 processes the event message, and finally outputs the event message to the display module 250 for display and output.

FIG. 3 is a schematic flowchart of a red packet receiving and sending method 300 according to an embodiment of this application. As shown in FIG. 3, the red packet receiving and sending method mainly includes the following steps.

S310: A first electronic device receives a red packet message and/or sends a red packet message, and correspondingly, a server sends the red packet message and/or receives the red packet message.

When the first electronic device receives the red packet message sent by the server, optionally, the red packet message includes one or more of logged-in account information (for example, a Huawei account) on a transmit end device, a red packet amount, a quantity of divided red packets, and a red packet blessing.

It should be understood that when the first electronic device is powered on or starts a program, a transceiver module and a call module of the first electronic device establish a network connection or a message subscription relationship with the server. In addition, a processing module subscribes to a red packet message event from the transceiver module, and subscribes to a call start or end event from the call module. After receiving the red packet message pushed by the server, the transceiver module notifies the processing module.

When the first electronic device sends the red packet message sent to the server, optionally, the red packet message includes one or more of logged-in account information (for example, a Huawei account) on the first electronic device, the red packet amount, the quantity of divided red packets, and the red packet blessing.

It should be understood that when the first electronic device is powered on or starts the program, the transceiver module and the call module of the first electronic device establish the network connection or the message subscription relationship with the server. In addition, the processing module subscribes to the red packet message event from the transceiver module, subscribes to the call start or end event from the call module, and the transceiver module sends the red packet message to the server.

S320: If the first electronic device displays a call screen (or when the first electronic device displays a call screen), the first electronic device displays the red packet message receiving interface and/or the red packet message sending interface on the call screen in response to receiving the red packet message and/or sending the red packet message.

For example, if the first electronic device displays the call screen, when receiving the red packet message, the first electronic device displays the red packet message receiving interface on the call screen.

It should be understood that, after receiving the red packet message, the processing module of the first electronic device notifies the display module to display the red packet message receiving interface. In addition, the processing module determines, based on a call status obtained through monitoring and saving or real-time querying from the call module, that if the first electronic device is displaying the call screen, the first electronic device displays the red packet message receiving interface on the call screen in response to receiving the red packet message.

For example, if the first electronic device displays the call screen, when sending the red packet message, the first electronic device displays the red packet message sending interface on the call screen.

It should be understood that the transceiver module of the first electronic device sends the red packet message to the server, and notifies the display module to display the red packet message sending interface. In addition, the processing module determines, based on the call status obtained through monitoring and saving or real-time querying from the call module, that if the first electronic device is displaying the call screen, the first electronic device displays the red packet message sending interface on the call screen in response to sending the red packet message.

For example, when the first electronic device receives the red packet message, the red packet message receiving interface is a red packet receiving interface, and the red packet receiving interface may be displayed in a manner of a large red packet or a red packet bullet comment. When the first electronic device receives a plurality of red packet messages, the red packet message interface is a plurality of red packet opening interfaces, and the red packet opening interface may be displayed in a manner of a red packet list or a plurality of red packet bullet comments.

Based on the technical solution in the method 300, the red packet may be directly sent and received on the call screen, a plurality of red packet opening interfaces can be opened at a time, and a plurality of red packets may alternatively temporarily exist in a same location, so that a user can receive/send the red packet at the same time during a video call of a current device. In this way, a task of receiving/sending the red packet can be completed without closing or minimizing a video interface, so that the red packet can be received and sent in a timely manner, and interest of receiving/sending the red packet is enhanced.

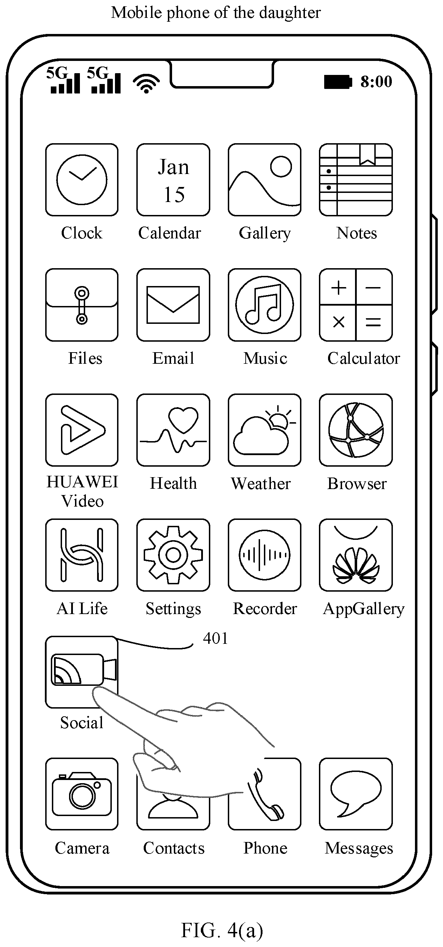

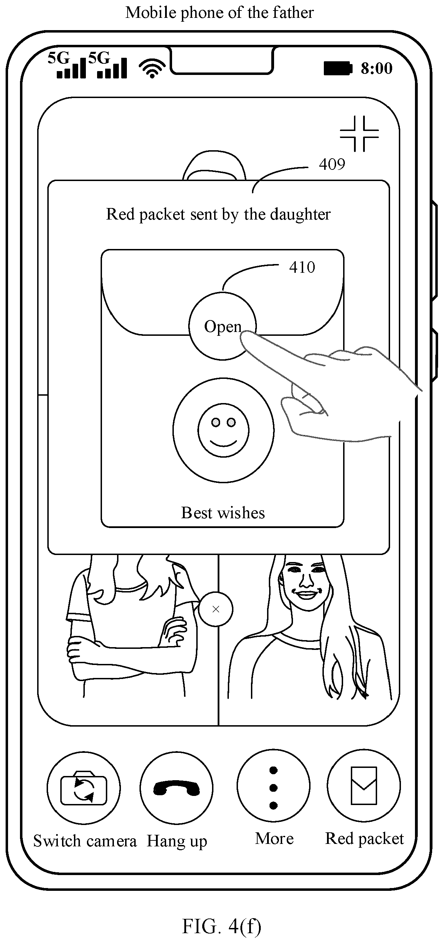

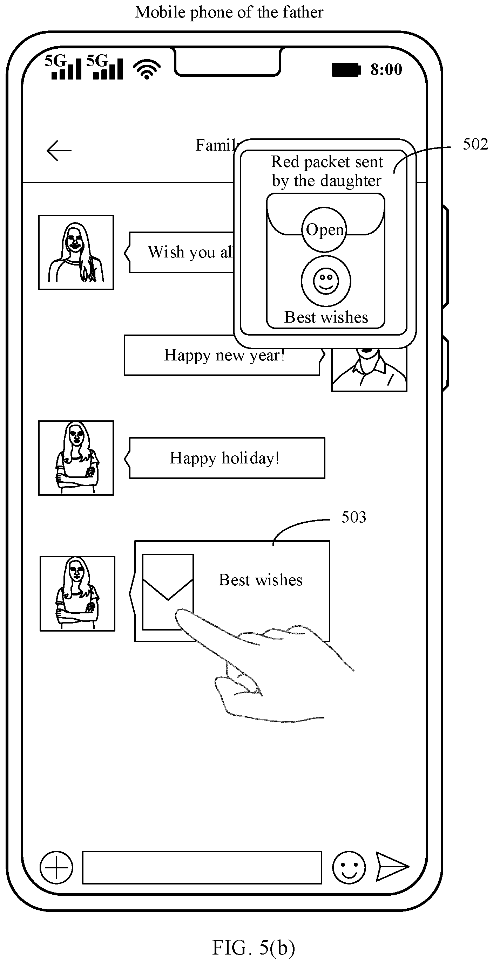

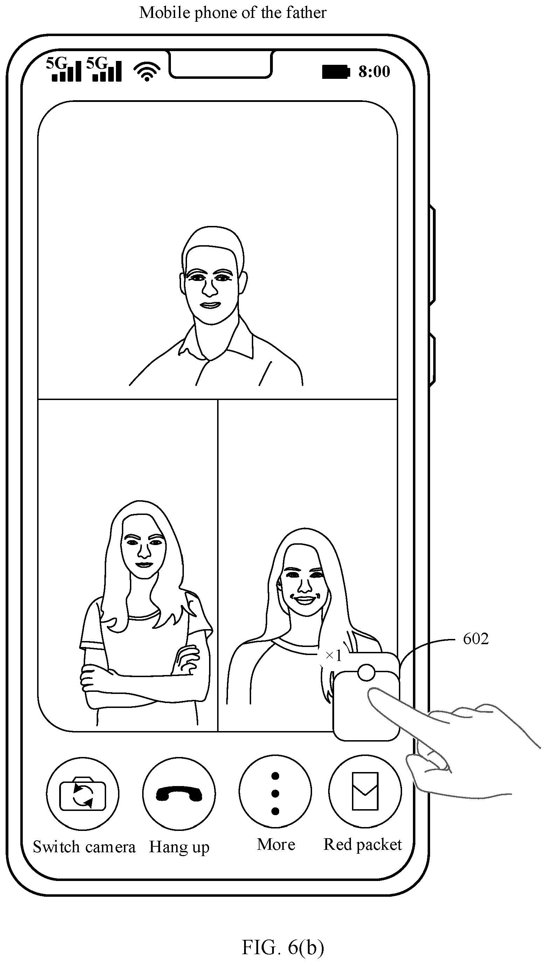

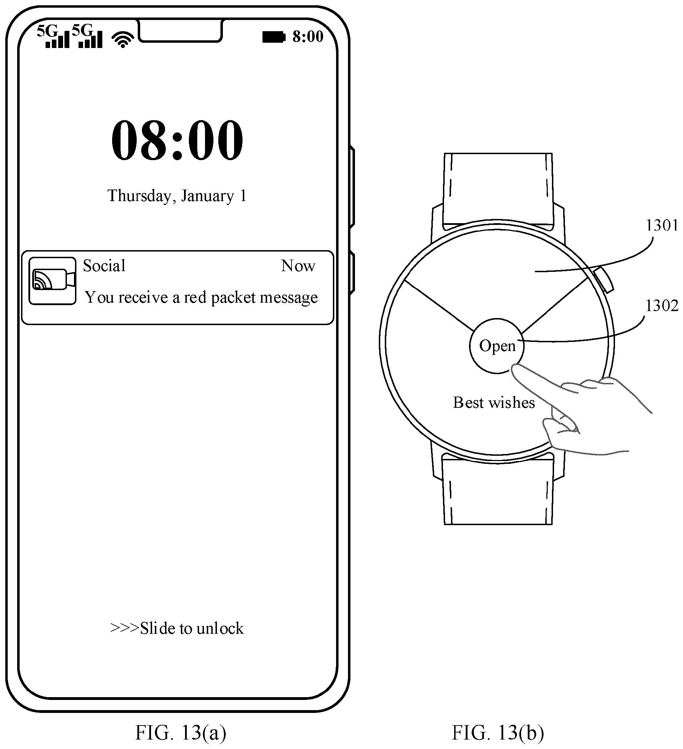

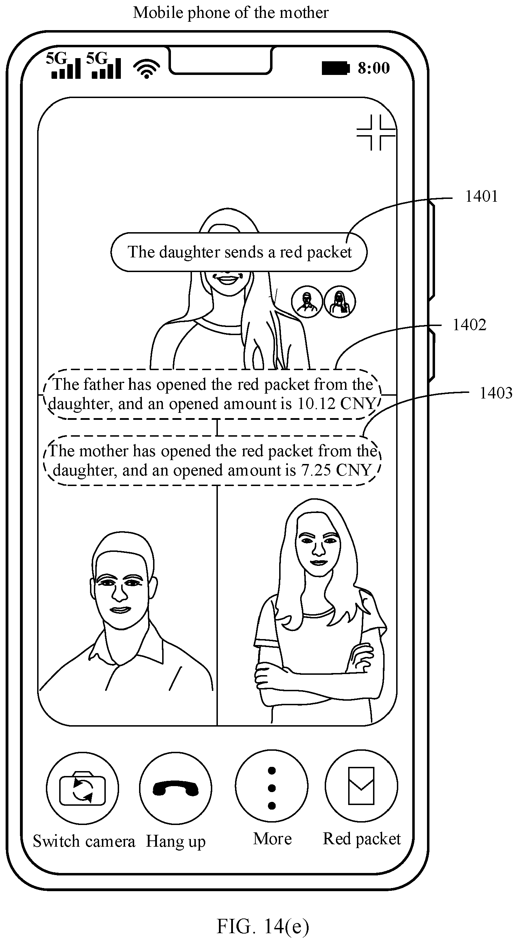

It should be understood that the social application provided in embodiments of this application includes but is not limited to an application that can implement a social function, an office program, and a game application that has a video call scenario. The red packet message in embodiments of this application may be a message used to prompt the user to send the red packet or open the red packet. Optionally, the red packet message may be a red packet message (for example, a red packet message 503 in FIG. 5(b)) on a text message interface, may be a red packet window (for example, a red packet opening window 409 in FIG. 4(f) and a red packet opening window 1301 in FIG. 13(b)), may be a red packet icon (for example, an icon 602 in FIG. 6(b)), or may be a bullet comment (for example, a bullet comment 1401 in FIG. 14(e)). This is not limited in embodiments of this application.

FIG. 4(a) to FIG. 4(g) are a group of graphical user interfaces (graphical user interfaces, GUIs) according to an embodiment of this application. An example in which a first electronic device is a mobile phone is used to further describe embodiments of this application.

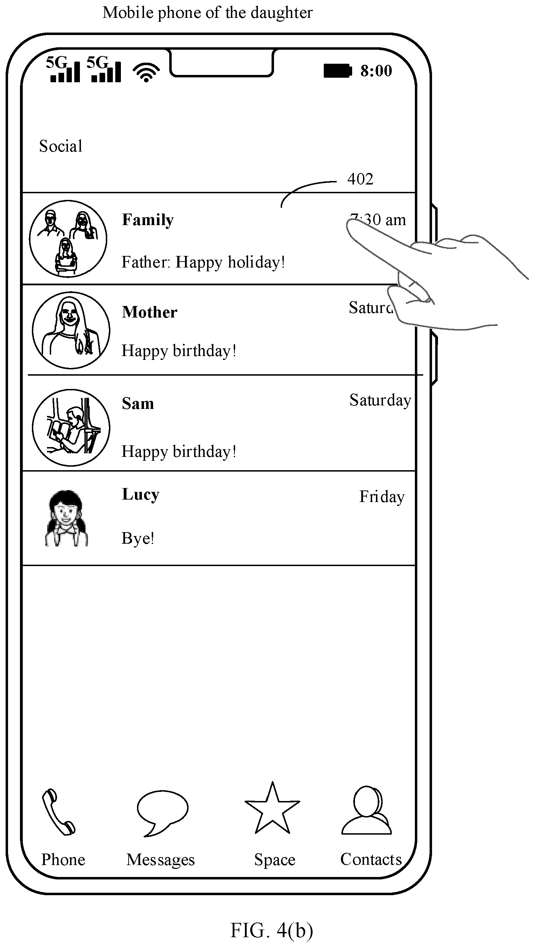

FIG. 4(a) is a screen of a mobile phone of a daughter. A home screen of the mobile phone includes icons of a plurality of applications (applications, Apps), and the plurality of applications include Clock, Calendar, Gallery, Notes, a social app, and the like. In response to an operation of a user on a social application icon 401, the mobile phone may display a GUI shown in FIG. 4(b).

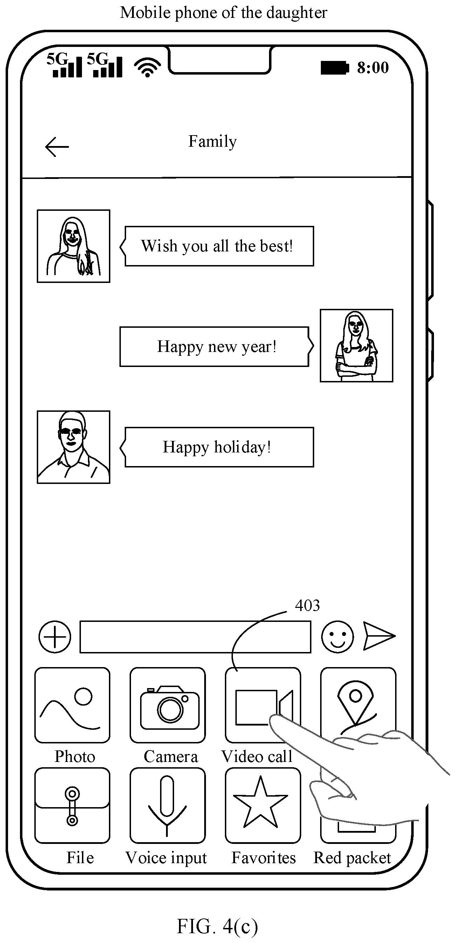

As shown in FIG. 4(b), the mobile phone may display a display interface of the social application in response to receiving an operation of tapping the icon 401 by the user. The bottom of the display interface includes information about four controls, which are respectively a call control, a message control, a space control, and a contact control. A current display interface displays a display interface corresponding to the message control. The interface displays a one-to-one chat message record and a group chat message record. In response to an operation of the user on a group chat message record 402, the mobile phone may display a GUI shown in FIG. 4(c).

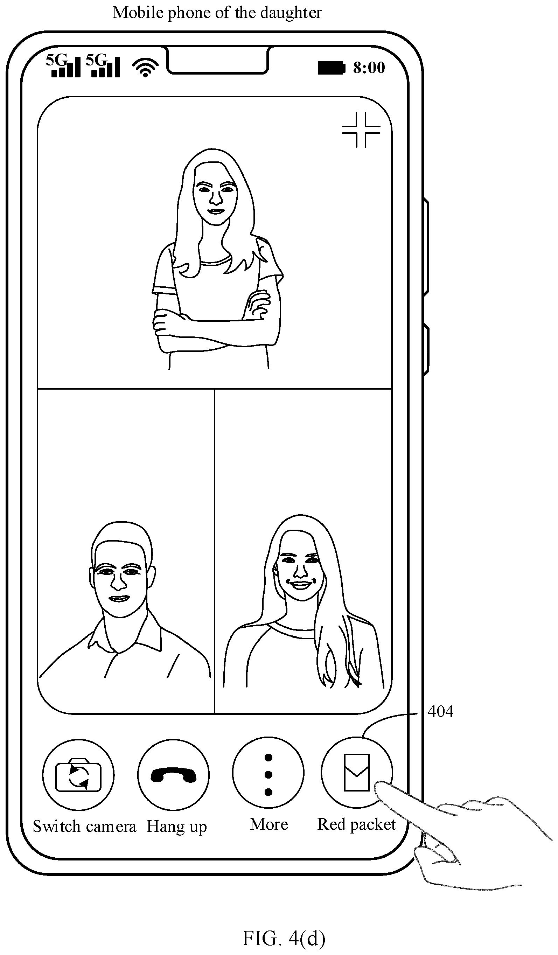

As shown in FIG. 4(c), in response to an operation of the user on the group chat message record 402, the mobile phone may display a chat interface of a "Family" group chat. A plurality of controls are displayed at the bottom of the interface, and are respectively Photo, Camera, Video call, Location, File, Voice input, Favorites, and Red packet corresponding to a plurality of controls. The control is a visual graphical interface element presented to the user and a software component included in an application, and controls data processed by the application and an interaction operation about the data. The user may interact with the control by using an operation like touching or sliding, to read and edit information related to the application. Generally, the control may include visual interface elements such as an icon, a button, a menu, a tab, a text box, and a status bar. In response to an operation (for example, a touch operation or a tap operation) of the user on different controls, different interfaces may be displayed on a screen of the electronic device. In response to an operation of the user on a video call control 403, the mobile phone may display a GUI shown in FIG. 4(d).

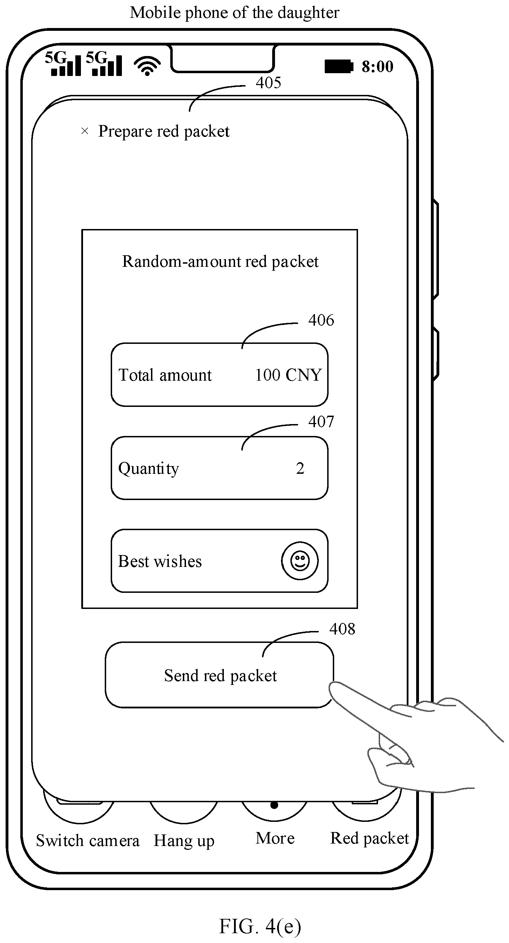

As shown in FIG. 4(d), in response to the operation of the user on the video call control 403, the mobile phone may display a video call screen of the "Family" group chat. The screen indicates that the father, the mother, and the daughter are in a video call in the "Family" group chat. The bottom of the screen includes information about four controls, which are respectively a switch camera control, a hang up control, a more control, and a red packet control. In response to an operation of the user on a red packet control 404, the mobile phone may display a GUI shown in FIG. 4(e).

As shown in FIG. 4(e), in response to an operation of the user on the red packet control 404, the mobile phone may display a display interface of the red packet control. A red packet sending window 405 is displayed on the display interface. For example, the daughter sends a random-amount red packet. The interface includes an input box 406 for a total amount, an input box 407 for a quantity of red packets, and a control 408 for sending the red packet. In response to an operation of the user on the control 408 for sending the red packet, the red packet may be sent. When a mobile phone of the father receives a red packet message, the mobile phone of the father displays a GUI shown in FIG. 4(f).

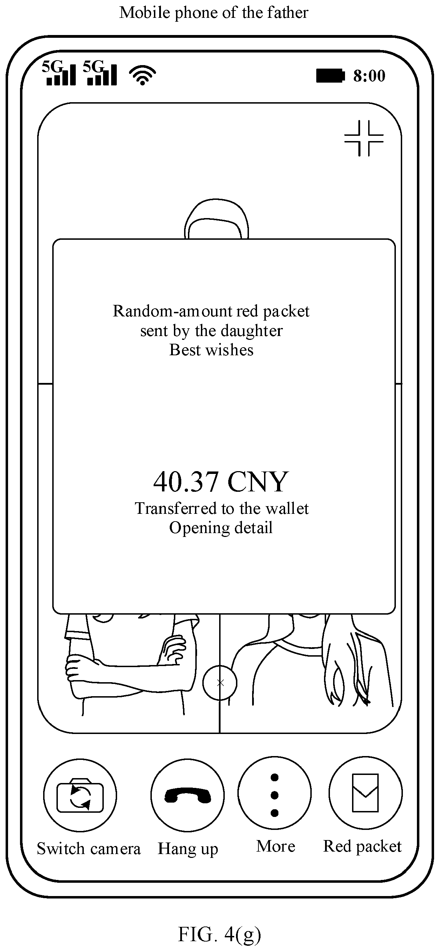

As shown in FIG. 4(f), in response to receiving the red packet message by the mobile phone, the mobile phone of the father displays a red packet opening window 409 on the video call screen. For example, the mobile phone of the father displays a red packet sent by the daughter on the video call screen. In response to an operation of the user on a red packet opening control 410, the mobile phone may display a GUI shown in FIG. 4(g).

As shown in FIG. 4(f), in response to the operation of the user on the red packet opening control 410, the mobile phone may display detail information after the red packet is opened. For example, the mobile phone of the father may display that the random-amount red packet sent by the daughter is opened, and an opened amount is 40.37 CNY

In an implementation, when the user does not tap to close the red packet message, the red packet message is pinned on the video call screen (that is, the red packet message is located at a top layer of the video call screen), and is not replaced by a new message. In another implementation, if the user still does not open the red packet after preset time, the red packet message may be displayed in a corner (or an edge) of the video call screen, for example, minimized to a red packet icon 602 shown in FIG. 6(b), to prevent the video call screen from being blocked by the red packet message during a video call.

Based on the solution in the foregoing embodiments, when users are in the video call, the users may perform an operation of sending the red packet on the video call screen, or may perform an operation of opening the red packet on the video call screen. In other words, the user can implement an operation of receiving/sending the red packet without redirecting to the text message interface, which can facilitate the user to receive/send the red packet during the video call.

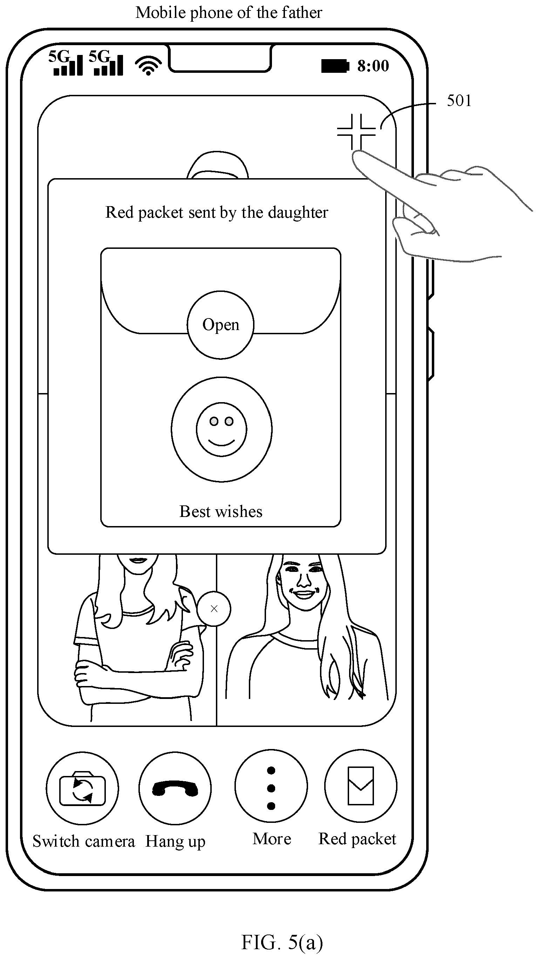

FIG. 5(a) to FIG. 5(c) are another group of GUIs according to an embodiment of this application.

As shown in FIG. 5(a), in response to receiving the red packet message, the mobile phone of the father displays the red packet opening window on the video call screen, where the screen includes a video call screen minimize control 501. In response to an operation of the user on the video call screen minimize control 401, the mobile phone may display a GUI shown in FIG. 5(b).

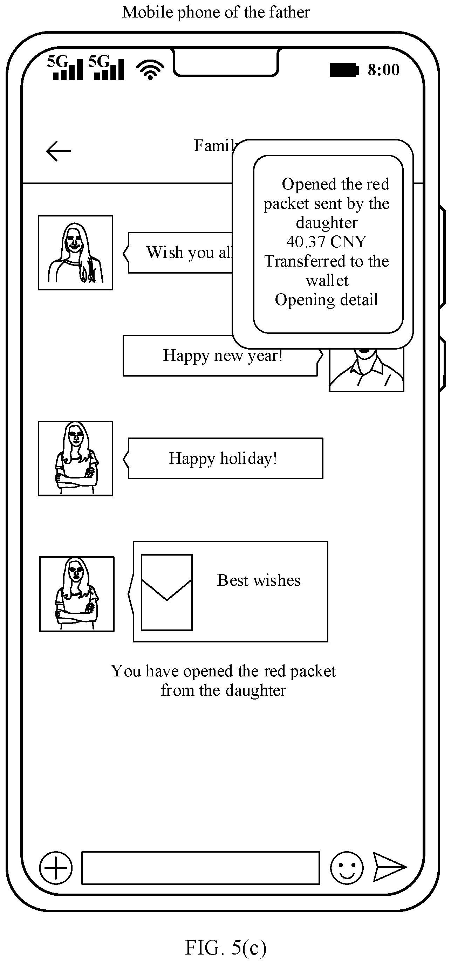

As shown in FIG. 5(b), in response to the operation of the user on the video call screen minimize control 401, the video call screen of the mobile phone of the father is minimized. In this case, the mobile phone may display a floating window 502 of the video call screen on a chat interface of the group chat, and a red packet message icon 503 is also displayed on the chat interface. In response to an operation of the user on the icon 503, the mobile phone may display a GUI shown in FIG. 5(c).

As shown in FIG. 5(c), in response to the operation of the user on the icon 503, it is displayed under the icon 503 that the father has opened the red packet from the daughter, and it is also synchronously displayed on the window 502 that the red packet from the daughter has been opened, and a specific opened amount is 40.37 CNY

Based on the solution in the foregoing embodiments, after the user minimizes the video call screen, the operation of opening the red packet can also be performed on the text message interface, and the red packet message can be synchronously changed on the text message interface and the video call screen.

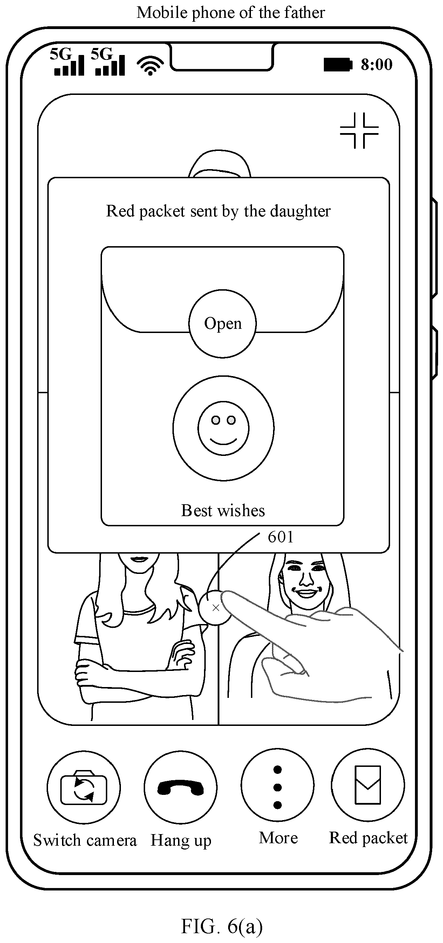

FIG. 6(a) to FIG. 6(c) are another group of GUIs according to an embodiment of this application.

As shown in FIG. 6(a), in response to receiving the red packet message, the mobile phone of the father displays the red packet opening window on the video call screen, where the screen includes a window closing control 601. In response to an operation of the user on the window closing control 601, the mobile phone may display a GUI shown in FIG. 6(b). Optionally, the user taps a blank area on the display interface, and the mobile phone may also display a GUI shown in FIG. 6(b).

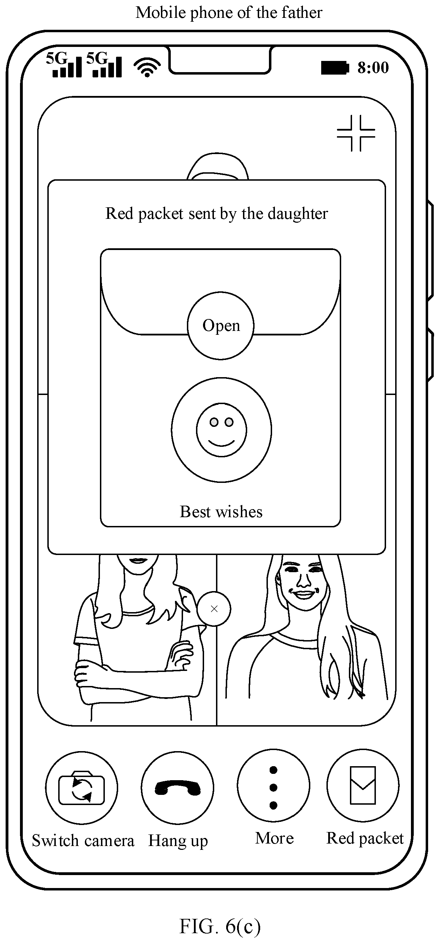

As shown in FIG. 6(b), in response to the operation of the user on the window closing control 601, the red packet opening window 409 is minimized to the red packet icon 602, and the icon 602 may display a quantity of received red packets. For example, when the father receives a red packet sent by the daughter, the icon 602 may display " ×1". In response to an operation of the user on the icon 602, the mobile phone may display a GUI shown in FIG. 6(c). It should be understood that when the user receives a plurality of red packets, the icon 602 may include the plurality of red packets, and correspondingly, the icon 602 may display "×N". In an implementation, the number N displayed on the icon 602 is a quantity of all red packets received by the user during a current video chat. In another implementation, the number N displayed on the icon 602 is a quantity of red packets that are received by the user and that are not opened during a current video chat. It may be understood that the number N displayed on the icon 602 may be updated in real time based on an operation of the user on the red packet message.

As shown in FIG. 6(c), in response to the operation of the user on the icon 602, the red packet opening window may be displayed again on the video call screen.

Based on the solution in the foregoing embodiments, the red packet message received by the user on the video call screen may be minimized, and the user may choose to perform an operation of opening the red packet when the user needs to open the red packet. When the user does not need to open the red packet, the user can minimize the red packet message to prevent the video call screen from being blocked by the red packet message during the video call.

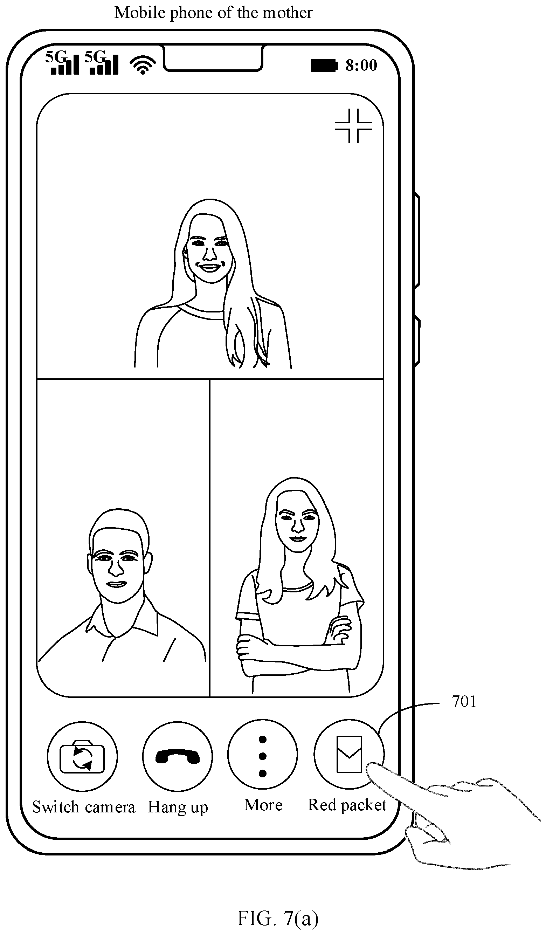

FIG. 7(a) to FIG. 7(f) are another group of GUIs according to an embodiment of this application.

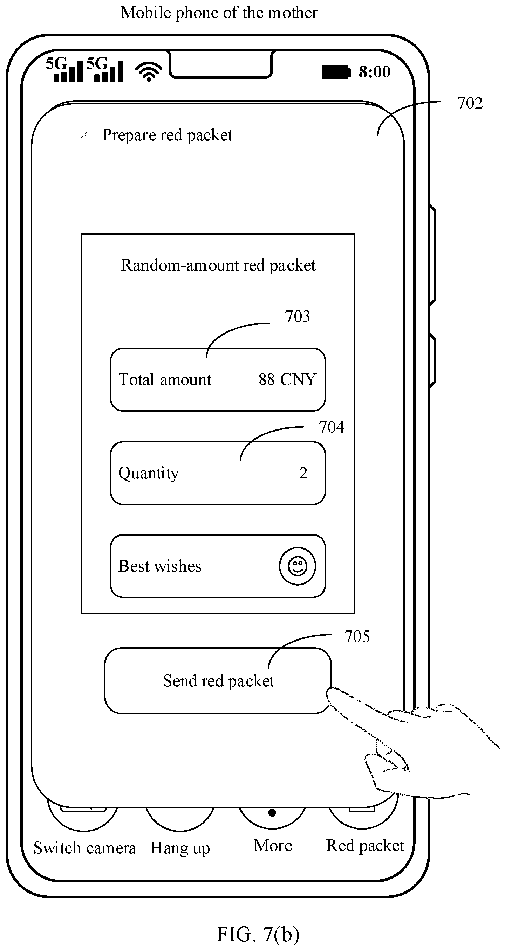

As shown in FIG. 7(a), after the daughter performs an operation of sending the red packet, the mother also performs the operation of sending the red packet on a mobile phone of the mother. In response to an operation of tapping a red packet control 701 by the user, the mobile phone may display a GUI shown in FIG. 7(b).

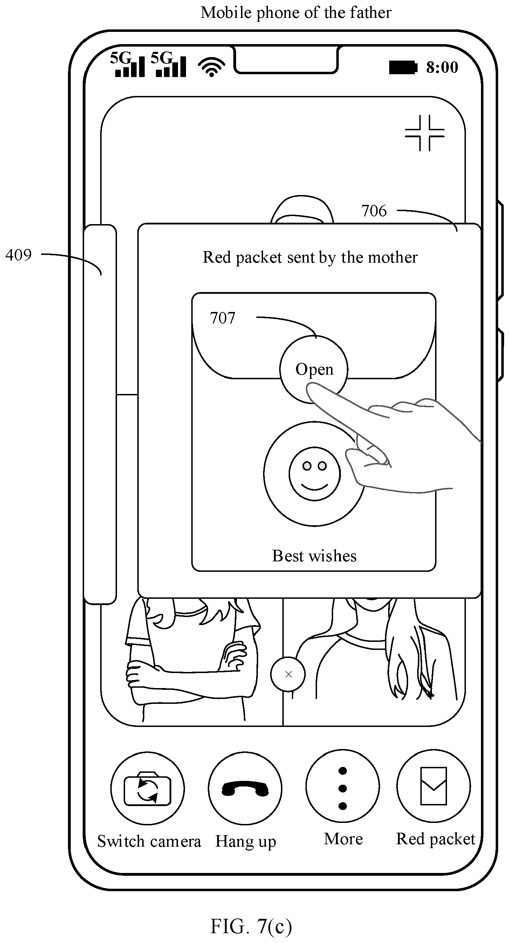

As shown in FIG. 7(b), in response to the operation of tapping the red packet control 701 by the user, the mobile phone may display the display interface of the red packet control. A red packet sending window 702 is displayed on the display interface. For example, the mother sends the random-amount red packet. The interface includes an input box 703 for the total amount, an input box 704 for the quantity of red packets, and a control 705 for sending the red packet. In response to an operation of the user on the control 705 for sending the red packet, the red packet may be sent. When the mobile phone of the father receives the red packet message again, the mobile phone of the father displays a GUI shown in FIG. 7(c).

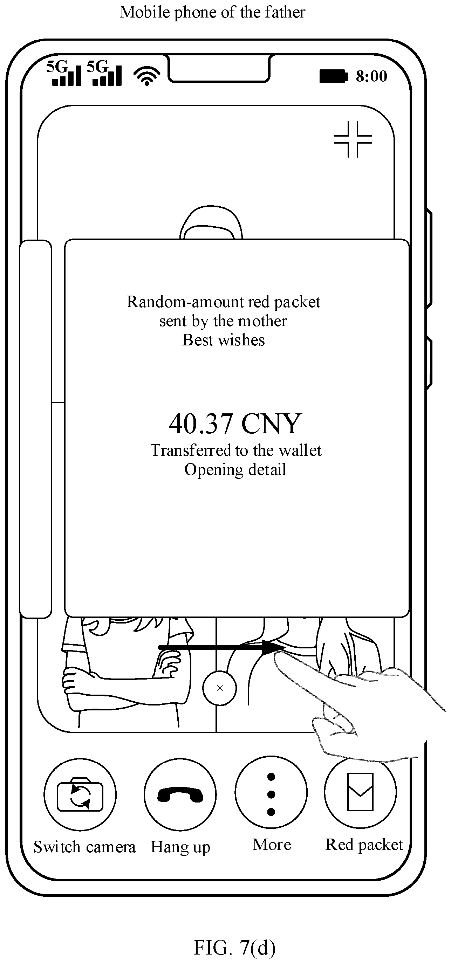

As shown in FIG. 7(c), in response to receiving the red packet message by the mobile phone, for example, the mobile phone of the father displays two red packet opening windows on the video call screen, which are respectively a part of the red packet opening window 409 for the red packet sent by the daughter and all of a red packet opening window 706 for the red packet sent by the mother. When the mobile phone receives a plurality of red packets, there is a red packet opening window that cannot be completely displayed. As shown in FIG. 7(c), only the part of the red packet opening window for the red packet sent by the daughter is displayed. Optionally, the plurality of red packet opening interfaces may be arranged from left to right, or may be arranged from top to bottom. This is not limited in embodiments. For example, when the father receives the red packets sent by the daughter and the mother, the red packet opening window 409 for the red packet sent by the daughter and the red packet opening window 706 for the red packet sent by the mother are arranged from left to right. In an implementation, red packet messages received during the current video chat may be sequentially arranged and displayed. For example, the user may browse and switch, by sliding left or right, red packet opening windows displayed on a current video call screen. Optionally, when a plurality of red packet messages are received, a latest received red packet message may be preferentially displayed, or a red packet message that is not opened may be preferentially displayed. In another implementation, red packet messages that are received during the current video chat and that are not opened may be sequentially arranged and displayed, and opened red packet messages may not be displayed on an arrangement interface. Optionally, when there are a plurality of red packet messages that are not opened, the latest received red packet message may be preferentially displayed. For example, in FIG. 7(c), neither the red packet sent by the daughter nor the red packet sent by the mother is opened, and the father lately receives the red packet sent by the mother. Therefore, the red packet opening window 706 for the red packet sent by the mother is preferentially displayed. In response to an operation of the user on a red packet opening control 707, the mobile phone may display a GUI shown in FIG. 7(d).

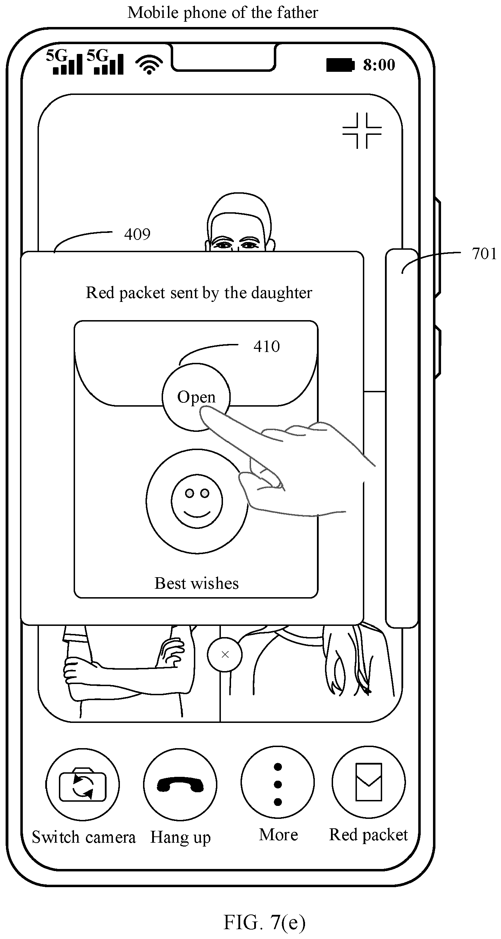

As shown in FIG. 7(d), in response to the operation of the user on the red packet opening control 707, the mobile phone may display detail information after the red packet is opened. For example, the mobile phone of the father displays that the random-amount red packet sent by the mother is opened, and an opened amount is 40.37 CNY In response to an operation of sliding the red packet opening window rightward by the user, the mobile phone may display a GUI shown in FIG. 7(e).

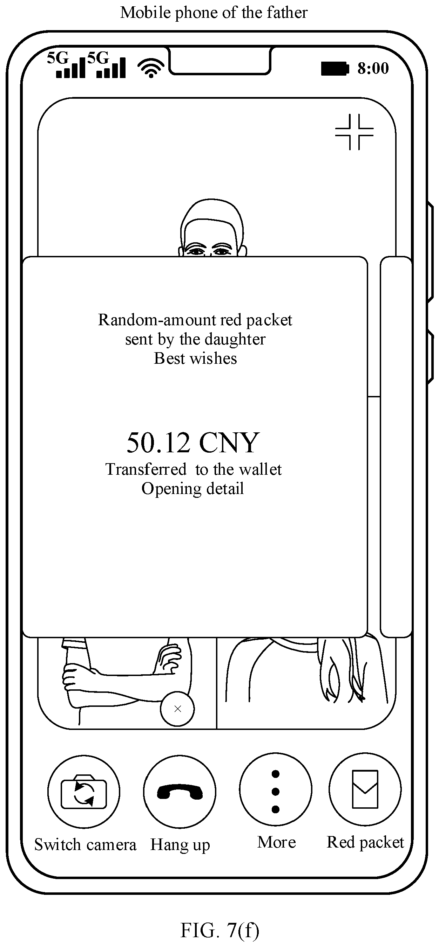

As shown in FIG. 7(e), optionally, in response to the operation of sliding the red packet opening window rightward by the user, the mobile phone may completely display the red packet opening window 409 for the red packet sent by the daughter. In response to an operation of the user on the red packet opening control 410, the mobile phone may display a GUI shown in FIG. 7(f).

As shown in FIG. 7(f), in response to the operation of the user on the red packet opening control 410, the mobile phone may display detail information after the red packet is opened. For example, the mobile phone of the father displays that the random-amount red packet sent by the daughter is opened, and an opened amount is 50.12 CNY

Based on the solution in the foregoing embodiments, when receiving a plurality of red packets, the user may flexibly select, on the video call screen, a red packet that needs to be opened.

It should be understood that, as shown in FIG. 6(a) to FIG. 7(f), when the user receives one or more red packets, the red packets may be displayed as the red packet icon 602 shown in FIG. 6(b). In a possible implementation, when one or more red packet messages are received, the video call screen directly displays the red packet icon 602, to prevent the video call screen from being blocked by the red packet messages during the video call. In another possible implementation, when one or more red packet messages are received, the video call screen displays one or more red packet opening windows (for example, the red packet opening window 409 in FIG. 4(f)). In response to an upward sliding operation of the user on the red packet opening window, or in response to a rightward sliding operation of the user on the red packet opening window that is on the left, or in response to an operation of the user on the window closing control 601, or in response to an operation of tapping a blank area by the user, or in response to that the user does not open the red packet within preset time, the red packet opening window 409 is minimized to the red packet icon 602. Optionally, in response to an operation of the user on the red packet icon 602, the red packet opening window is displayed on the video interface. In other words, when the user taps the icon 602 again, the one or more red packet messages may be displayed again in an expanded manner. Similar to the foregoing embodiments, the one or more red packet messages may be all red packet messages received during the current chat, or the red packet messages that are received during the current chat and that are not opened.

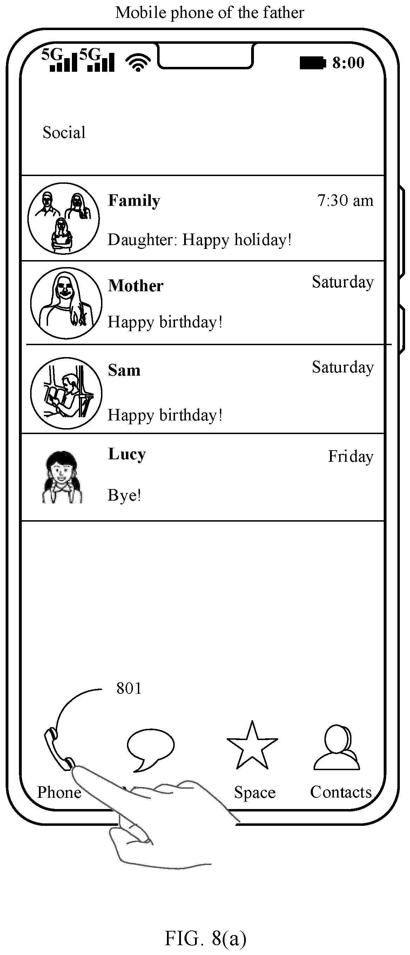

FIG. 8(a) to FIG. 8(h) are another group of GUIs according to an embodiment of this application. The red packet receiving and sending method in this application may be further applied to a smart screen. The following further describes the embodiment of this application. It should be understood that an operation of the user on the smart screen may be implemented by using a remote control of the smart screen, or may be implemented by performing an operation (for example, a touch operation or a tap operation) on a control on the smart screen.

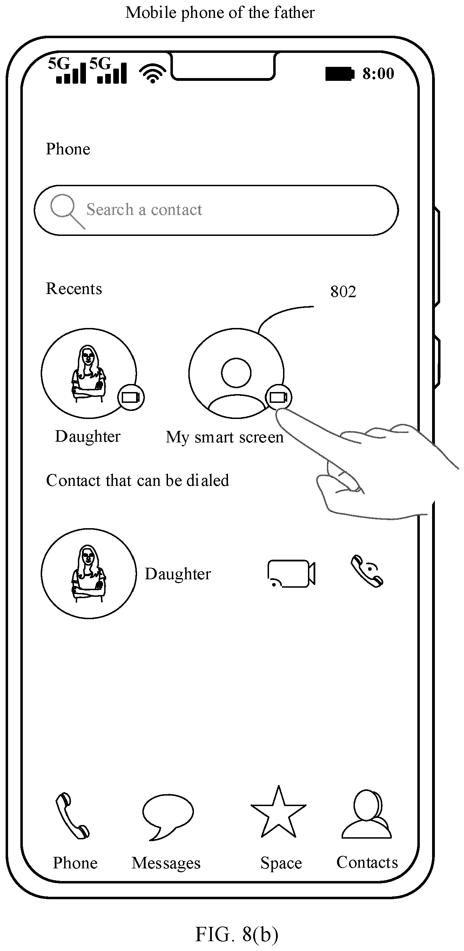

As shown in FIG. 8(a), the mobile phone of the father may display a display interface of a social application. The bottom of the display interface includes information about four controls, which are respectively a call control, a message control, a space control, and a contact control. A current display interface displays a display interface corresponding to the message control. In response to an operation of the user on a call control 801, the mobile phone may display a GUI shown in FIG. 8(b).

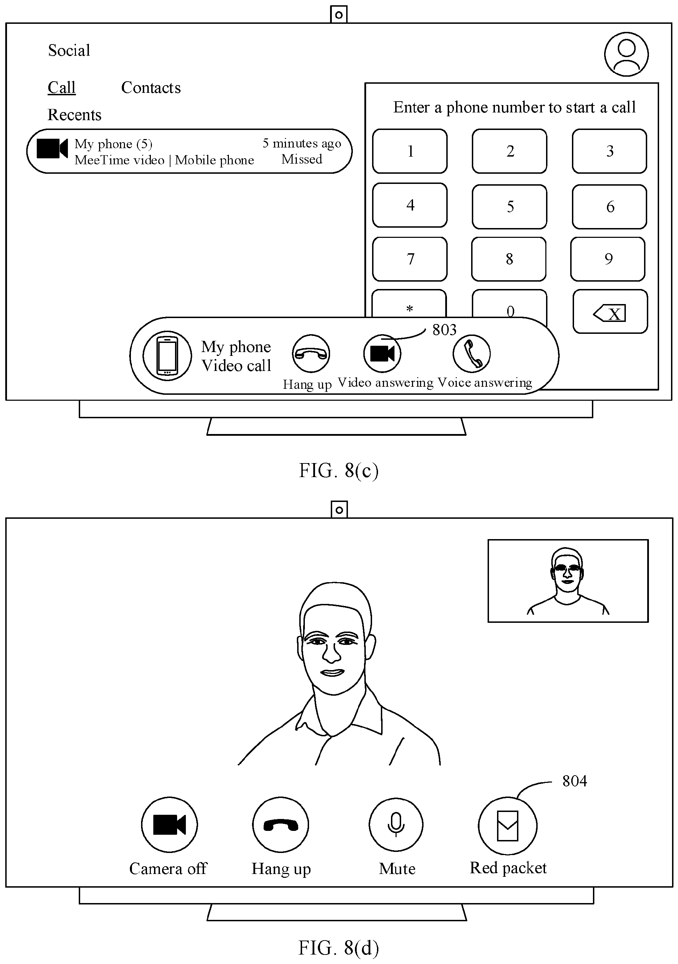

As shown in FIG. 8(b), in response to the operation of the user on the call control 801, the mobile phone displays a call screen, and the screen may display latest calls with the daughter and my smart screen. In response to an operation of the user on a control 802 for my smart screen, the smart screen may display a GUI shown in FIG. 8(c).

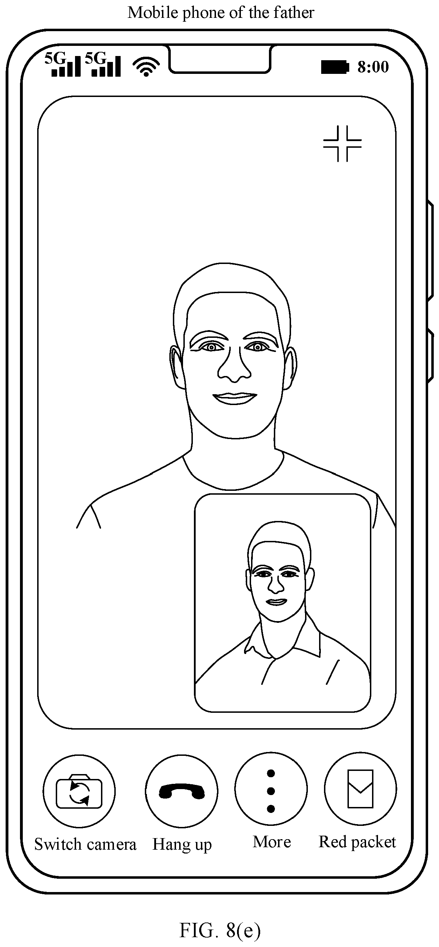

As shown in FIG. 8(c), in response to the operation of the user on the control 802 for my smart screen, the smart screen may display an incoming video call message. In response to an operation of the user on a video answering control 803, the smart screen may display a GUI shown in FIG. 8(d), and the mobile phone may display a GUI shown in FIG. 8(e), indicating that the father is performing a video call with a son in front of the smart screen by using the mobile phone.

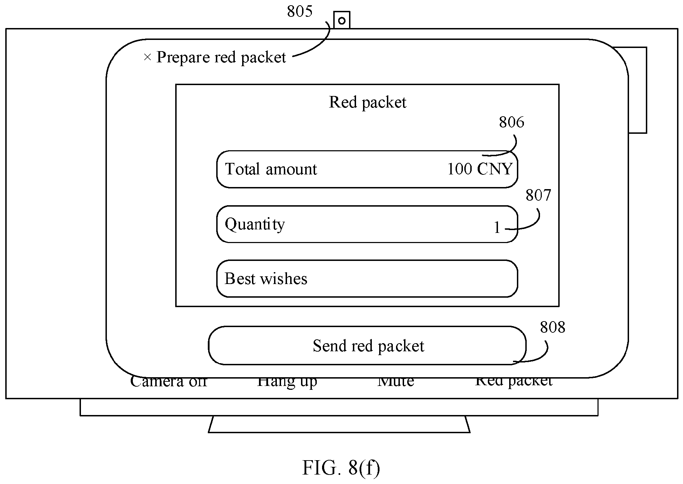

As shown in FIG. 8(d), when a cursor on the smart screen is located on the video answering control 803, the smart screen displays a video call screen in response to an operation of tapping a confirm button on the remote control by the user. The bottom of the screen includes information about four controls, which are respectively a camera off control, a hang up control, a mute control, and a red packet control. In response to an operation of the user on a red packet control 804, the smart screen may display a GUI shown in FIG. 8(f).

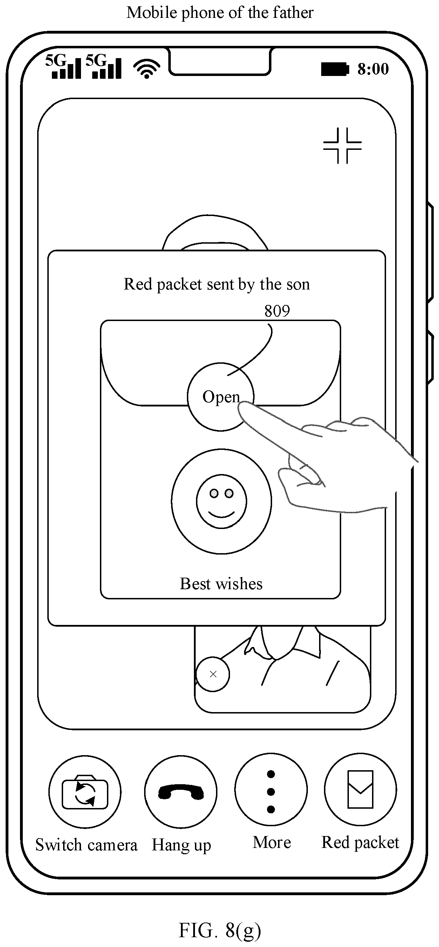

As shown in FIG. 8(f), in response to the operation of the user on the red packet control 804, the smart screen may display a display interface of the red packet control. A red packet sending window 805 is displayed on the display interface. For example, the son sends the red packet. The interface includes an input box 806 for a total amount, an input box 807 for a quantity of red packets, and a control 808 for sending the red packet. In response to an operation of the user on the control 808 for sending the red packet, the red packet may be sent. When the mobile phone of the father receives a red packet message, the mobile phone of the father displays a GUI shown in FIG. 8(g).

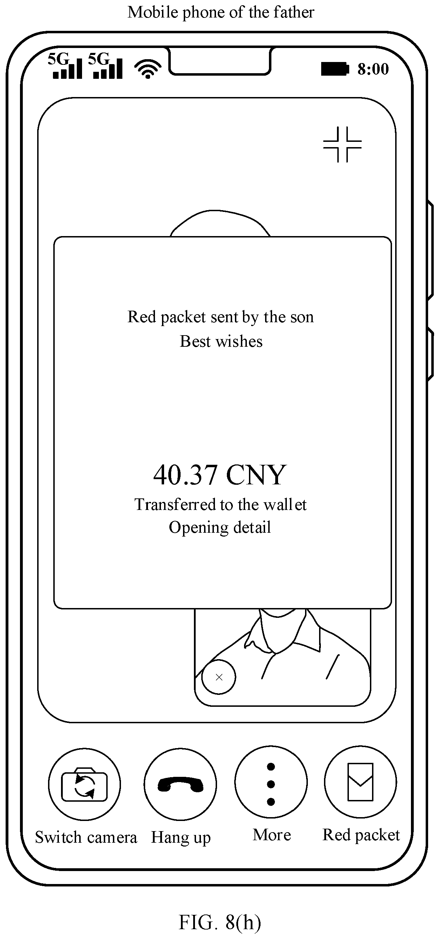

As shown in FIG. 8(g), in response to receiving the red packet message, the mobile phone of the father displays a red packet opening window on the video call screen. In response to an operation of the user on a red packet opening control 809, the mobile phone may display a GUI shown in FIG. 8(h).

As shown in FIG. 8(h), in response to the operation of the user on the control 809, the mobile phone may display detail information after the red packet is opened. For example, the mobile phone of the father may display that the red packet sent by the son is opened, and an opened amount is 40.37 CNY

It should be understood that embodiments may be further applied to a scenario in which three or more users perform a group chat. The user may send the red packet on the smart screen, and may also open, on the smart screen, the red packet sent by the user.

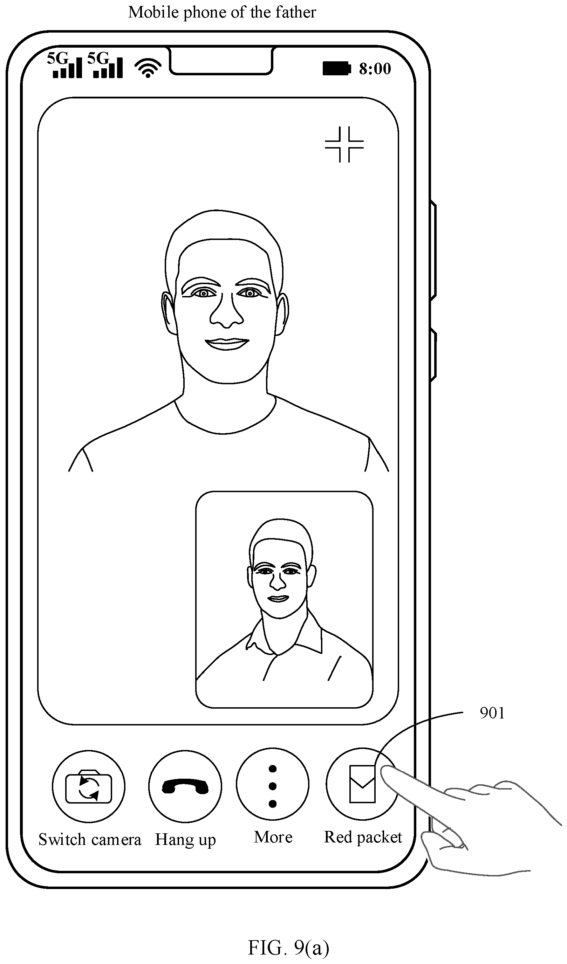

FIG. 9(a) to FIG. 9(d) are another group of GUIs according to an embodiment of this application.

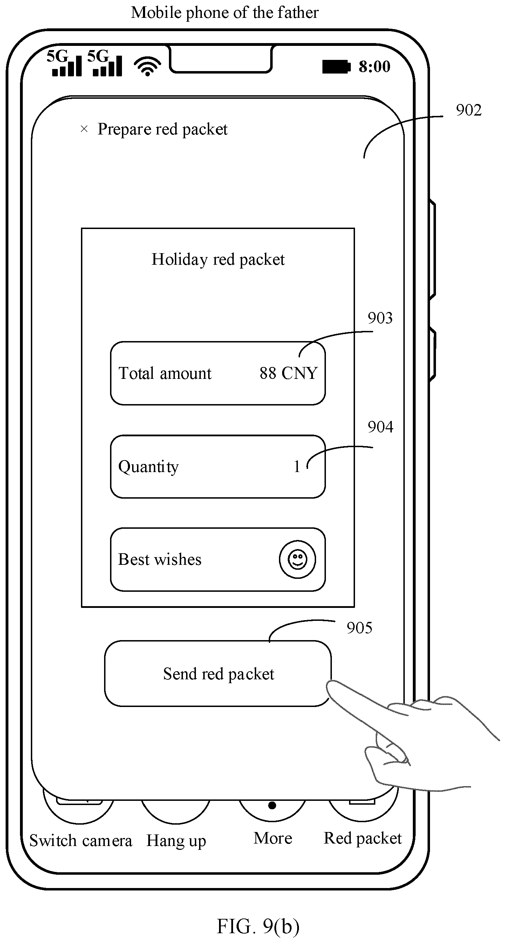

As shown in FIG. 9(a), the father makes the video call with the son in front of the smart screen by using the mobile phone. In this case, the mobile phone displays the video call screen. In response to an operation of the user on a red packet control 901, the mobile phone may display a GUI shown in FIG. 9(b).

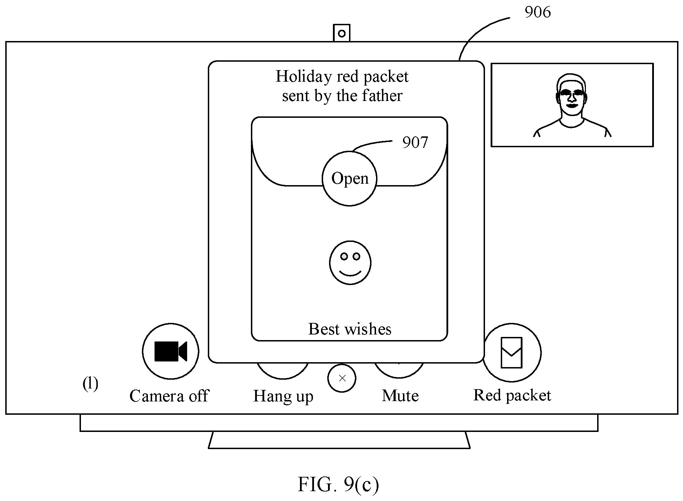

As shown in FIG. 9(b), in response to the operation of the user on the red packet control 901, the mobile phone displays a red packet sending window 902 on the video call screen. For example, the father sends a holiday red packet, and the screen includes an input box 903 for a total amount, an input box 904 for a quantity of red packets, and a control 905 for sending the red packet. In response to an operation of the user on the control 905 for sending the red packet, the red packet may be sent. When the smart screen of the son receives a red packet message, the smart screen displays a GUI shown in FIG. 9(c).

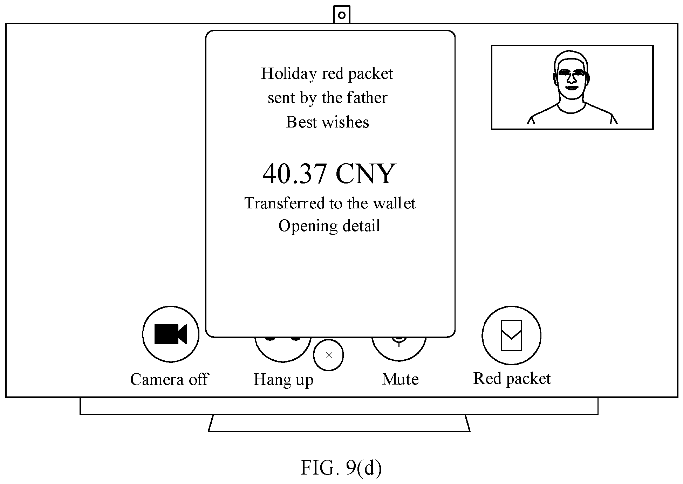

As shown in FIG. 9(c), in response to receiving the red packet message by the smart screen, the smart screen of the son displays a red packet opening window 906 on the video call screen. For example, the red packet sent by the father is displayed on the video call screen of the smart screen. In response to an operation of the user on a red packet opening control 907 on the red packet opening window 906, the smart screen may display a GUI shown in FIG. 9(d).

As shown in FIG. 9(d), in response to the operation of the user on the red packet opening control 907, the smart screen may display detail information after the red packet is opened. For example, the smart screen displays that the holiday red packet sent by the father is opened, and an opened amount is 40.37 CNY

It should be understood that embodiments may be further applied to a scenario in which three or more users perform a group chat. The user may receive a plurality of red packets on the smart screen. The user may select, on the smart screen by using the remote control, a red packet that needs to be opened. Alternatively, the user may close the red packet interface, and minimize (or fold) the red packet message, to display the red packet icon 602.

It may be understood that, for an operation on the red packet message on the smart screen, refer to the operation on the red packet message on the mobile phone in the foregoing embodiments. Details are not described herein again.

It should be understood that, the foregoing embodiments show the operation of receiving/sending the red packet in an architecture of a system. The architecture of the system includes an electronic device like a mobile phone, a tablet computer, a smart screen, or a smartwatch that can independently complete red packet receiving and sending processing.

Based on the solutions in the foregoing embodiments, the operation of receiving/sending the red packet on the video call screen of the electronic device may be implemented. The user may receive the red packet message and/or send the red packet message on the video call screen during the video call, so that the user efficiently performs an operation on the red packet.

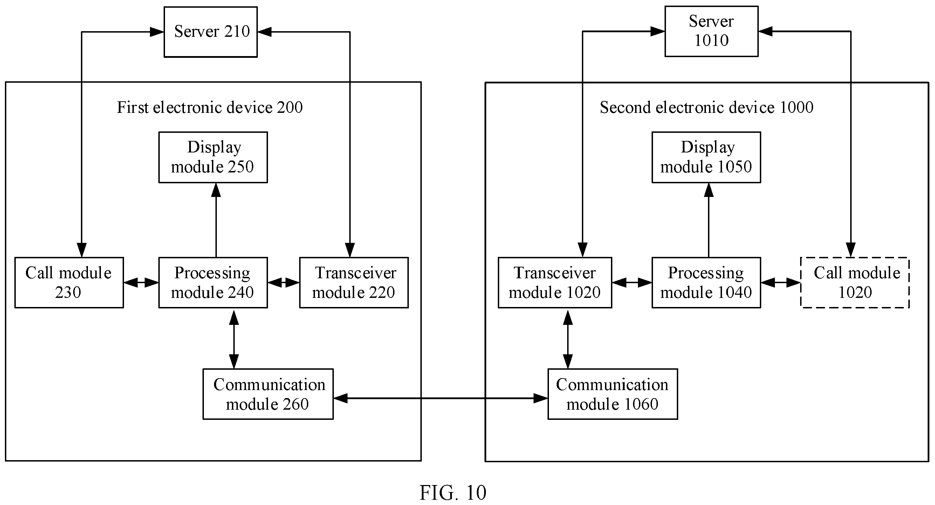

FIG. 10 is a schematic diagram of an architecture of a system to which a technical solution is applied according to an embodiment of this application. The system includes a first electronic device 200, a server 210, a second electronic device 1000, and a server 1010. In addition to the foregoing structure, the first electronic device 200 further includes a communication module 260. The second electronic device 1000 may include a transceiver module 1020, a call module 1030, a processing module 1040, a display module 1050, and a communication module 1060. It should be understood that the second electronic device 1000 is a device associated with the first electronic device 200, and the second electronic device associated with the first electronic device and the first electronic device log in to a same account.

It should be understood that a quantity or a type of electronic devices is not limited in the architecture of the system shown in FIG. 10. The architecture of the system may include one or more first electronic devices that can independently complete red packet receiving and sending processing, for example, electronic devices such as a mobile phone, a tablet computer, a smart screen, or a smartwatch, and further include one or more second electronic devices that can independently complete red packet receiving and sending processing or cannot independently complete red packet receiving and sending processing, for example, electronic devices such as a mobile phone, a tablet computer, a smart screen, or a smartwatch. For example, the architecture of the system shown in FIG. 10 may include the following two scenarios.

### Scenario 1:

When the second electronic device is an electronic device that can independently complete red packet receiving and sending processing, the architecture of the system further includes the server 1010. The transceiver module 1020 and the call module 1030 in the second electronic device 1000 may establish a network connection to the server 1010. The transceiver module 1020 and the call module 1030 may send an event message to the processing module 1040. The processing module 1040 processes the event message, and finally outputs the event message to the display module 1050 for display and output. The first electronic device and the second electronic device may be communicatively connected. The first electronic device sends the message event to the second electronic device. The transceiver module 1020 in the second electronic device 1000 may forward the event message sent by the communication module 1060 to the processing module 1040. The processing module 1040 processes the event message, and finally outputs the event message to the display module 1050 for display and output. It should be understood that, in this case, the first electronic device and the second electronic device are not distinguished. In other words, the first electronic device may serve as a primary device to send the message event to the second electronic device, and the second electronic device may also serve as the primary device to send the message event.

### Scenario 2:

When the second electronic device is an electronic device that cannot independently complete red packet receiving and sending processing, the second electronic device receives information about an operation of opening a red packet by a user, sends an execution instruction to the first electronic device, and the first electronic device performs red packet receiving and sending processing. It should be understood that, in this case, the first electronic device is the primary device, the second electronic device is a secondary device, and the first electronic device completes red packet receiving and sending processing.

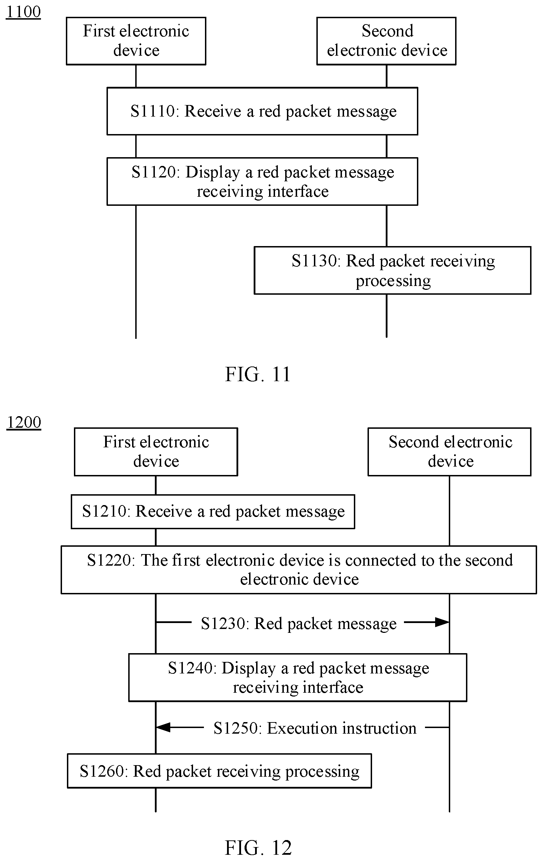

FIG. 11 is a schematic flowchart of a red packet receiving and sending method 1100 applicable to the foregoing scenario 1 according to an embodiment of this application. As shown in FIG. 11, the red packet receiving and sending method mainly includes the following steps.

S 1110: A first electronic device and a second electronic device receive a red packet message, and correspondingly, a server sends the red packet message.

Specific content is similar to that in step S310. Details are not described herein again.

It should be understood that, in scenario 1, the first electronic device and the second electronic device may establish a network connection or a message subscription relationship with the server, at least one of the first electronic device and the second electronic device may receive the red packet message sent by the server, or both the first electronic device and the second electronic device may receive the red packet message sent by the server.

S1120: The first electronic device and the second electronic device display a red packet message receiving interface.

It should be understood that, when both the first electronic device and the second electronic device receive the red packet message sent by the server, both the first electronic device and the second electronic device may display the red packet message receiving interface, so that a user receives the red packet message by using any electronic device. For example, a mobile phone and a tablet computer of the user log in to a same account. In this case, the user does not carry the mobile phone, and only carries the tablet computer. When the red packet message is received, both the mobile phone and the tablet computer display the red packet message receiving interface, and the user may open the red packet by using the carried tablet computer.

S1130: The second electronic device performs red packet receiving processing.

It should be understood that, after the second electronic device receives information about performing red packet receiving processing, the second electronic device may perform red packet receiving processing. In other words, the second electronic device can independently complete red packet receiving processing. The information about performing red packet receiving processing may be an operation of opening a red packet by the user.

It should be noted that, after receiving the information about performing red packet receiving processing, the first electronic device may also perform red packet receiving processing. In other words, any electronic device that can independently complete red packet receiving and sending processing may perform red packet receiving processing after receiving red packet message processing information.

After the second electronic device performs red packet receiving processing, both the first electronic device and the second electronic device may display red packet receiving detail information. For example, both the tablet computer and the mobile phone of the user display the red packet message receiving interface. The user may tap a corresponding icon on the red packet message receiving interface of the mobile phone to receive the red packet. Subsequently, both the mobile phone and the tablet computer display red packet opening detail information, indicating that the red packet has been opened. Alternatively, the user may tap a corresponding icon on the red packet message receiving interface of the tablet computer to receive the red packet. Subsequently, both the mobile phone and the tablet computer display red packet opening detail information, indicating that the red packet has been opened. Optionally, the red packet opening detail information may be displayed only on an electronic device that completes data packet receiving and sending processing.

It should be noted that the method 1100 shows a method for receiving the red packet by a plurality of electronic devices that can independently complete receiving and sending processing, and the plurality of electronic devices that can independently complete receiving and sending processing may also send the red packet by using a method similar to the method 1100.

Based on the technical solution in the method 1100, when the plurality of electronic devices that can independently complete receiving and sending processing log in to the same user account, the electronic devices can synchronously display the red packet message interface. The user may select, based on an actual requirement, an electronic device that performs an operation of opening the red packet. For example, the user may select an electronic device that is close to the user to open the red packet, so that the user can open the red packet efficiently and conveniently. It may be understood that, for a process of receiving the red packet message and opening the red packet by the electronic device that is selected by the user and that performs the operation of opening the red packet, refer to related descriptions in the foregoing embodiments. Details are not described herein again.

FIG. 12 is a schematic flowchart of a red packet receiving and sending method 1200 applicable to the foregoing scenario 2 according to an embodiment of this application. As shown in FIG. 12, the red packet receiving and sending method mainly includes the following steps.

S1210: A first electronic device receives a red packet message, and correspondingly, a server sends the red packet message.

Specific content is similar to that in step S310. Details are not described herein again.

S 1220: The first electronic device is connected to a second electronic device.

For example, the second electronic device may be an electronic device that logs in to a same account as the first electronic device, and the first electronic device may establish a communication connection to the second electronic device. For example, a communication connection may be established between a mobile phone and a smart screen that log in to a same account, and a communication connection may be established between a mobile phone and a tablet computer that log in to a same account.

For example, the first electronic device may determine, in a manner like Bluetooth (Bluetooth, BT) or wireless fidelity (wireless fidelity, Wi-Fi), that the second electronic device establishes the communication connection to the first electronic device.

It should be noted that there is no limitation on a sequence of performing step S1210 and step S1220. Step S1210 may be performed before step S1220; or step S1220 may be performed before step S1210; or step S1210 and step S1220 are performed simultaneously. This is not limited.

S1230: The first electronic device sends the red packet message, and correspondingly, the second electronic device receives the red packet message.

It should be understood that a manner in which the first electronic device sends the red packet message may be broadcast, multicast, or unicast. This is not limited in embodiments. After the first electronic device establishes the communication connection to the second electronic device, the first electronic device sends the red packet message to the second electronic device. Specifically, the communication module 260 of the first electronic device sends the red packet message to the communication module 1060 of the second electronic device.

S1240: The first electronic device and the second electronic device display a red packet message receiving interface.

Specific content is similar to that in step S1120. Details are not described herein again.

S1250: The second electronic device sends an execution instruction, and correspondingly, the first electronic device receives the execution instruction.

It should be understood that, before the second electronic device sends the execution instruction, the second electronic device receives an operation of receiving the red packet by the user, and the second electronic device cannot independently complete red packet receiving and sending processing, in other words, the second electronic device cannot perform red packet receiving processing.

It should be understood that, in response to the operation of receiving the red packet by the user, the second electronic device triggers the execution instruction, and sends the execution instruction to the first electronic device, where the execution instruction instructs the first electronic device to complete red packet receiving and sending processing.

For example, when the second electronic device is a smartwatch, the user may enable the second electronic device to trigger the execution instruction by tapping the red packet message receiving interface or shaking the smartwatch.

Specifically, the processing module 1040 of the second electronic device receives an operation of opening the red packet by the user, the processing module 1040 sends the execution instruction to the communication module 260 of the first electronic device by using the communication module 1060, and after receiving the execution instruction, the communication module 260 of the first electronic device notifies the processing module 240.

S1260: The first electronic device performs red packet receiving processing.

It should be understood that, after the first electronic device receives the execution instruction, the processing module 240 performs red packet receiving processing.

It should be understood that, after the processing module 240 performs red packet opening processing, the processing module 240 sends a completion instruction to the communication module 1060 by using the communication module 260. The communication module 1060 forwards the completion instruction to the processing module 1040 by using the transceiver module 1020. The processing module 1040 instructs the display module 1050 to update display to red packet opening detail information, indicating that the red packet has been opened.

After the first electronic device performs red packet receiving processing, both the first electronic device and the second electronic device may display red packet receiving detail information. For example, both the smartwatch and the mobile phone of the user display the red packet message receiving interface. The user may tap a corresponding icon on the red packet message receiving interface of the smartwatch to receive the red packet. Subsequently, both the mobile phone and the smartwatch display red packet opening detail information, indicating that the red packet has been opened.

Based on the technical solution in the method 1200, both the first electronic device and the second electronic device can display the red packet message. When receiving the red packet message, the second electronic device directly pops up a red packet opening interface, and the user can quickly open the red packet by performing the operation of opening the red packet on the second electronic device, so that the user can efficiently open the red packet.

FIG. 13(a) to FIG. 13(e) are another group of GUIs according to an embodiment of this application. An example in which the first electronic device is a mobile phone, the second electronic device is a smartwatch, and the smartwatch cannot independently complete red packet receiving and sending processing is used to further describe the embodiment of this application.

As shown in FIG. 13(a) and FIG. 13(b), the mobile phone establishes a communication connection to the smartwatch. Optionally, the mobile phone is in a screen-locked or a screen-off state. In FIG. 13(a), in response to receiving a red packet message, a red packet opening window 1301 is displayed on an interface of the smartwatch that is communicatively connected to the mobile phone. In response to an operation of a user on a red packet opening control 1302 on the red packet opening window 1301 or an operation of shaking the smartwatch by the user, the smartwatch may display a GUI shown in (c) in FIG. 12.

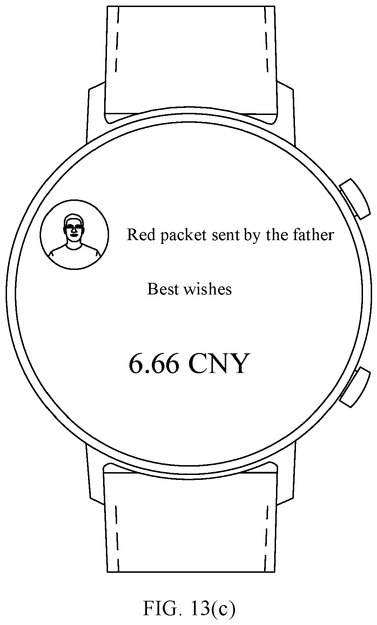

As shown in FIG. 13(c), in response to the operation of the user on the red packet opening control 1302 on the red packet opening window 1301 or the operation of shaking the smartwatch by the user, the smartwatch may display detail information after the red packet is opened. For example, the smartwatch displays that a red packet sent by the father is opened, and an opened amount is 6.66 CNY

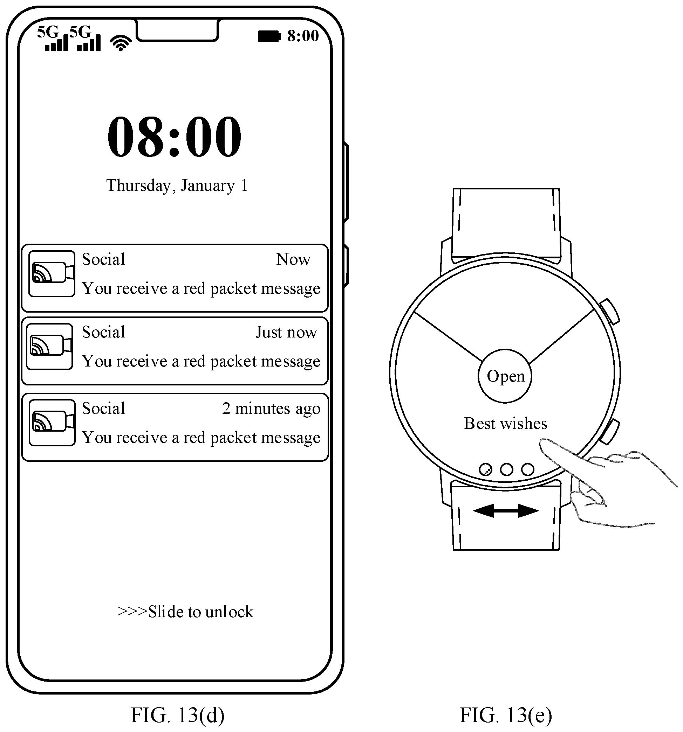

As shown in FIG. 13(d) and FIG. 13(e), after the mobile phone is successfully connected to the smartwatch, the mobile phone is in the screen-locked or the screen-off state. In response to receiving three red packet messages by the mobile phone in FIG. 13(d), the red packet opening window 1301 is displayed on the interface of the smartwatch. Optionally, the user may select, by sliding left or right or sliding up or down the interface of the smartwatch, a red packet that needs to be opened.

It should be understood that the foregoing embodiment shows a red packet receiving and sending method in an architecture of another system, and the architecture of the system includes at least two electronic devices. The at least two electronic devices can establish the communication connection, and the at least two electronic devices may be electronic devices of different types, or may be electronic devices of a same type.

Based on the technical solution in the foregoing embodiment, both the smartwatch and the mobile phone can display the red packet opening window. When receiving the red packet message, the smartwatch directly pops up the red packet opening window. A user wearing the smartwatch may implement the operation of opening the red packet by directly tapping the red packet on the interface of the smartwatch or shaking the smartwatch, so that the user can efficiently open the red packet. Further, when the mobile phone is in the screen-locked or the screen-off state, or when the user is far away from the mobile phone and is inconvenient to use the mobile phone, the user may open the red packet on the smartwatch, so that an opening process is efficient.

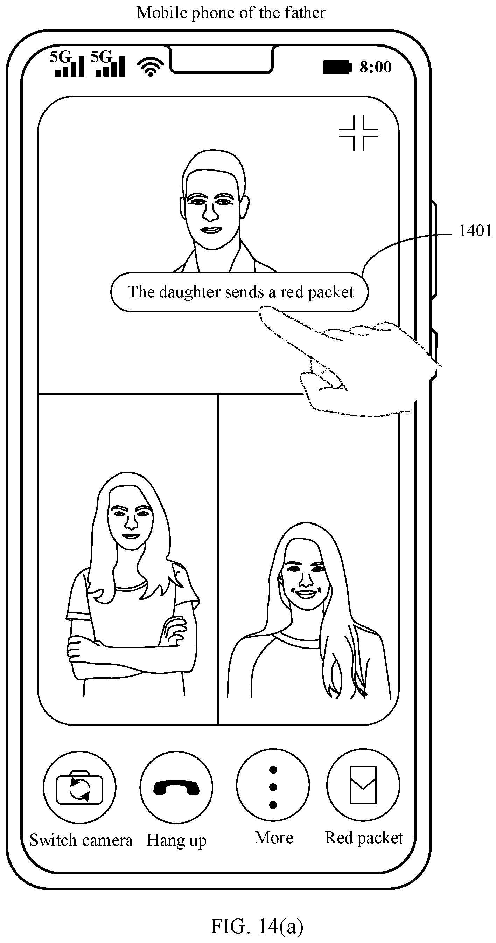

FIG. 14(a) to FIG. 14(f) are another group of GUIs according to an embodiment of this application, and is another display manner of a red packet message, that is, a red packet bullet comment.

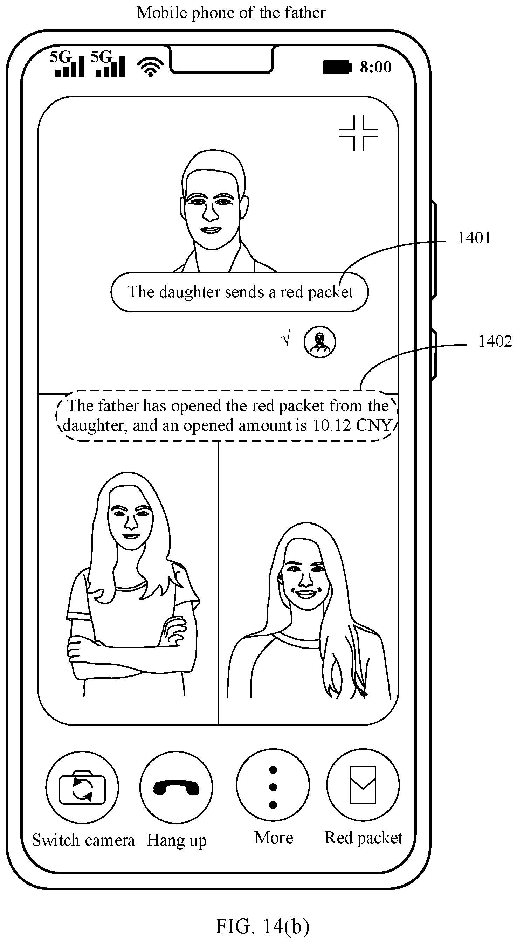

As shown in FIG. 14(a), a father, a mother, and a daughter are in a video call, a mobile phone of the father receives a red packet sent by the daughter, and a bullet comment 1401 is displayed on a video call screen of the mobile phone. Optionally, the red packet bullet comment 1401 is displayed from a left side to a right side of the video call screen in a scrolling manner. Optionally, the red packet bullet comment 1401 may be periodically displayed in the scrolling manner during the video call, for example, in a period of 5 seconds. In response to an operation of a user on the red packet bullet comment 1401, the mobile phone may display a GUI shown in FIG. 14(b).

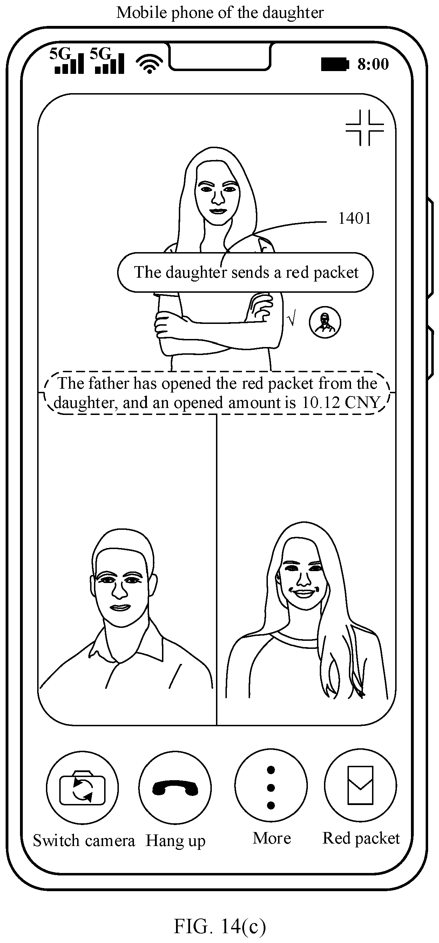

As shown in FIG. 14(b), in response to the operation of the user on the red packet bullet comment 1401, a red packet opening detail bullet comment 1402 is displayed on the video call screen of the mobile phone of the father. For example, the red packet opening detail bullet comment 1402 displays that the father has opened the red packet sent by the daughter, and an opened amount is 10.12 CNY A location at which the red packet opening detail bullet comment appears may be one or more specific locations. Optionally, a profile picture of a user who opens the red packet appears below the red packet message bullet comment 1401, indicating that the red packet has been opened by the user. For example, a profile picture of the father appears below the red packet bullet comment 1401, indicating that the red packet sent by the daughter has been opened by the father. In response to the operation of the user on the red packet bullet comment 1401, a mobile phone of a sender (the daughter) may display a GUI shown in FIG. 14(c).

As shown in FIG. 14(c), after the father opens the red packet, the mobile phone of the daughter synchronously responds, that is, the mobile phone of the daughter synchronously displays the profile picture of the user who has opened the red packet and the red packet opening detail bullet comment 1402, to prompt that the red packet sent by the sender (the daughter) has been opened. For example, the mobile phone of the daughter displays that the red packet has been opened by the father, and an opened amount is 10.12 CNY

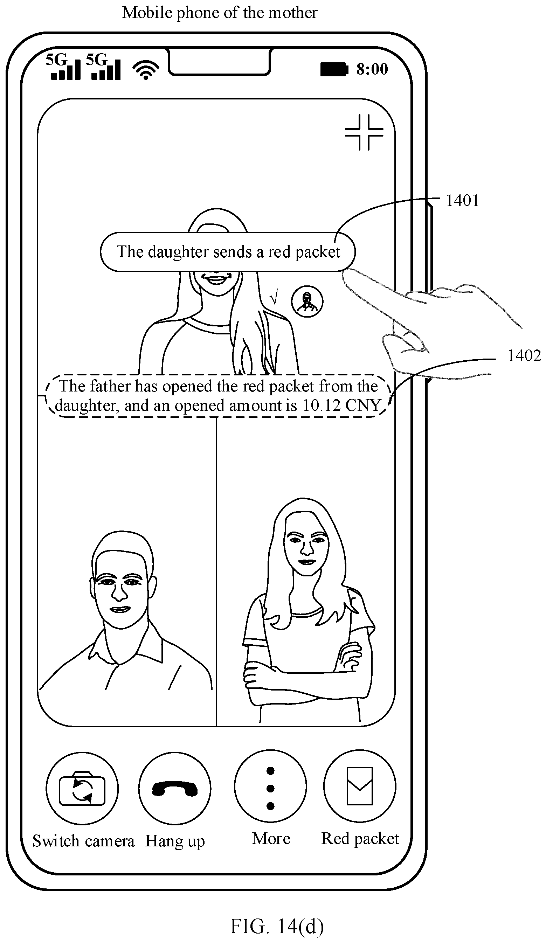

As shown in FIG. 14(d), after the father opens the red packet sent by the daughter, the red packet bullet comment 1401, the profile picture of the user who has opened the red packet, and the red packet opening detail bullet comment 1402 are also displayed on a video call screen of a mobile phone of the mother. In this case, the mother may also open the red packet sent by the daughter. In response to an operation of tapping the red packet bullet comment 1401 by the user (the mother), the mobile phone may display a GUI shown in FIG. 14(e).

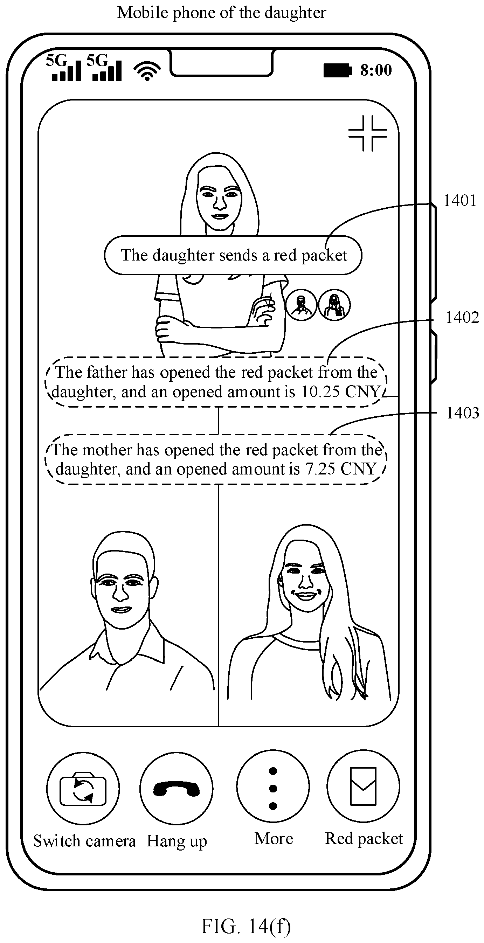

As shown in FIG. 14(e), in response to the operation of tapping the red packet bullet comment 1401 by the user (the mother), another red packet opening detail bullet comment 1403 is displayed on the video call screen of the mobile phone of the mother. For example, the red packet opening detail bullet comment 1403 displays that the mother has opened the red packet sent by the daughter, and an opened amount is 7.25 CNY In addition, a profile picture of another user who opens the red packet appears below the red packet bullet comment 1401, indicating that the red packet has been opened by the another user. For example, a profile picture of the mother appears again below the red packet bullet comment after the daughter sends the red packet, indicating that the red packet sent by the daughter has been opened by the father and the mother. In a possible implementation, the red packet sent by the daughter may be opened by a plurality of users. Before the red packet sent by the daughter is opened, the red packet bullet comment 1401 may be periodically displayed in a scrolling manner. After the red packet sent by the daughter is opened, the red packet bullet comment 1401 is not displayed in the scrolling manner. After both the father and the mother open the red packet sent by the daughter, red packet opening detail bullet comments of the father and the mother are separately displayed. Each red packet opening detail bullet comment may be repeatedly displayed once (that is, displayed twice in total) and then disappear, or each red packet opening detail bullet comment may be displayed only once or displayed more times. In another possible implementation, the red packet sent by the daughter can be opened by only one user. After the red packet sent by the daughter is opened by one user, the red packet bullet comment is not displayed in a scrolling manner. After the one user opens the red packet sent by the daughter, a red packet opening detail bullet comment of the user is displayed. The red packet opening detail bullet comment may be repeatedly displayed once (that is, displayed twice in total) and then disappear, or the red packet opening detail bullet comment may be displayed only once or displayed more times. In response to an operation of tapping the red packet bullet comment 1401 by the user, the mobile phone of the sender (the daughter) may display a GUI shown in FIG. 14(f).

As shown in FIG. 14(f), after the mother also opens the red packet, the mobile phone of the daughter also synchronously responds, and the mobile phone of the daughter synchronously displays the profile pictures of the users who have opened the red packet and the red packet opening detail bullet comments 1402 and 1403. For example, the mobile phone of the daughter displays that the red packet has been opened by the father and mother. An opened amount of the father is 10.12 CNY, and an opened amount of the mother is 7.25 CNY

It should be understood that the display manner of the red packet bullet comment in the foregoing embodiments may be further applied to an electronic device like a smart screen, a tablet computer, or a smartwatch. This is not limited in embodiments.

It should be understood that, when the foregoing red packet display manner is applied to a smart screen, after the red packet message bullet comment appears, a cursor is automatically on "Press OK to open the red packet". In other words, the user may press an "OK" button on the remote control to open the red packet. When there are a plurality of red packet message bullet comments, the user presses the "OK" button to open a first received red packet based on a time sequence of receiving red packets.

Based on the solution of the foregoing embodiments, during the video call of the user, the red packet message is displayed on the video call screen in the form of the bullet comment in the scrolling manner, to prevent the red packet message from being missed by the user. In addition, the display form of the red packet bullet comment also enhances interest of receiving/sending the red packet.

It should be understood that the display manner of the red packet in embodiments of this application includes but is not limited to a large red packet (for example, the red packet opening window 409 in FIG. 4(f)), a red packet list (for example, the red packet opening window 409 and the red packet opening window 701 in FIG. 7(e)), and a red packet bullet comment (for example, the bullet comment 1401 in FIG. 14(e)). Displaying the red packet in the form of the "large red packet" can help the user quickly open the red packet. Displaying the red packet in the form of the "red packet list" can enable a plurality of red packets to be directly displayed on the call screen, making it convenient for the user to open the red packets. Displaying the red packet in the form of the "red packet bullet comment" can improve experience interest of opening the red packet by the user.

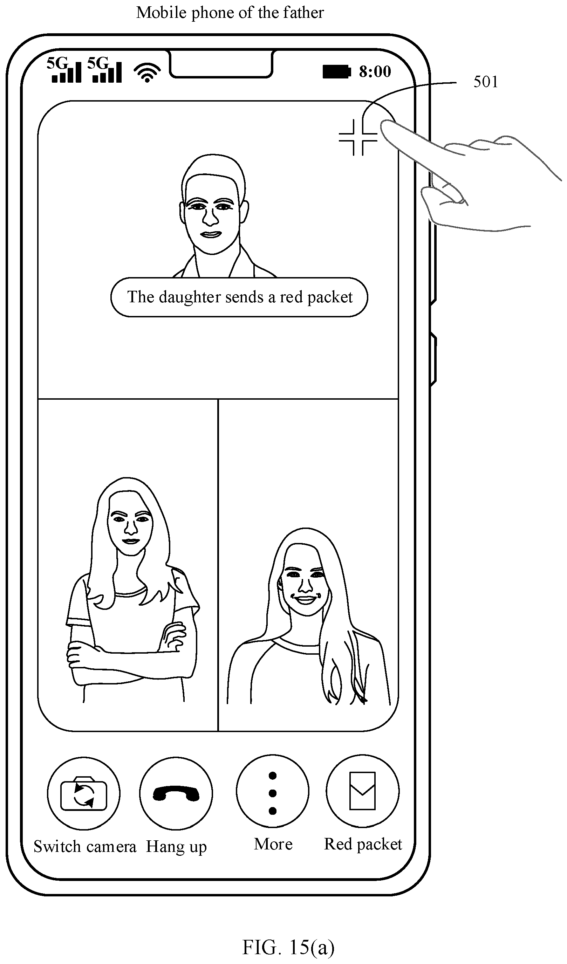

FIG. 15(a) to FIG. 15(c) are another group of GUIs according to an embodiment of this application.

As shown in FIG. 15(a), in response to receiving the red packet message by the mobile phone, the mobile phone of the father displays the red packet bullet comment on the video call screen, where the screen includes the video call screen minimize control 501. In response to an operation of tapping the video call screen minimize control 501 by the user, the mobile phone may display a GUI shown in FIG. 14(b).

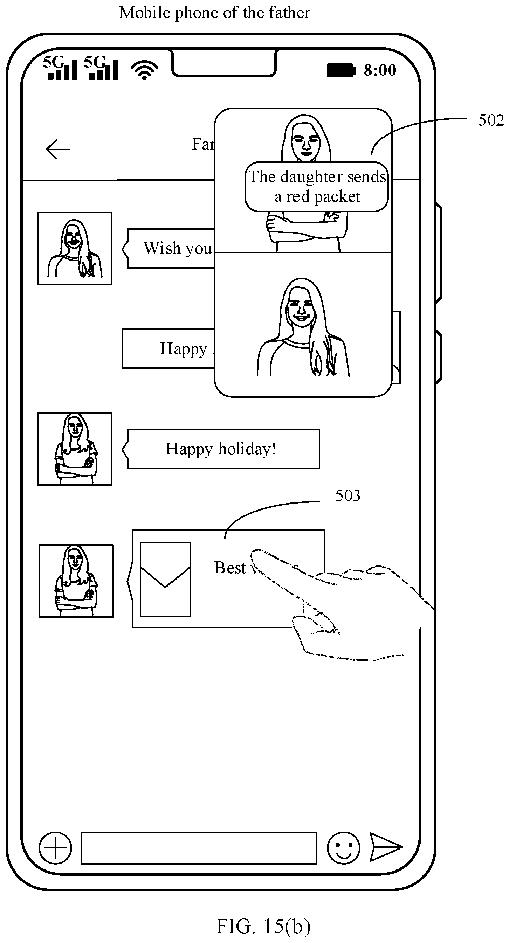

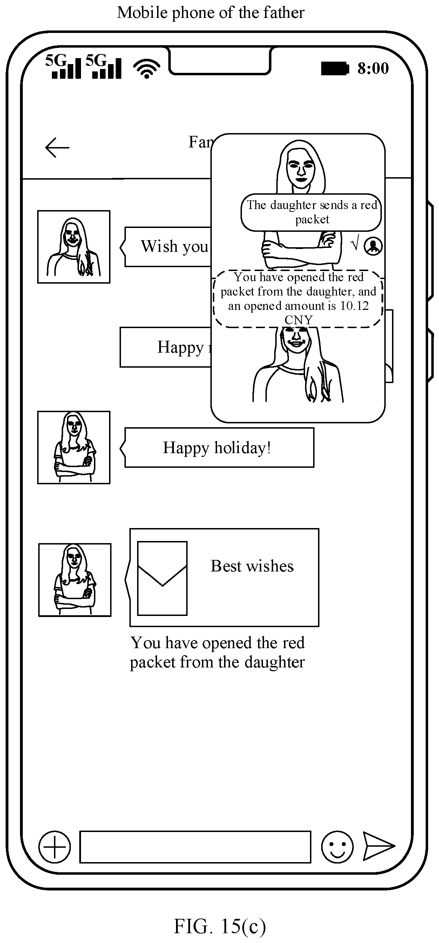

As shown in FIG. 15(b), in response to the operation of tapping the video call screen minimize control 501 by the user, the video call screen of the mobile phone of the father is minimized. In this case, the mobile phone may display the video call window 502 on the chat interface of the group chat, and the red packet message icon 503 is also displayed on the chat interface. In response to an operation of the user on the icon 503 in the text message, the mobile phone may display a GUI shown in FIG. 15(c).

As shown in FIG. 15(c), in response to the operation of the user on the icon 503 in the text message, it is displayed under the icon 503 that the father has opened the red packet from the daughter, and the red packet opening detail bullet comment is also synchronously displayed on the video call window 502, indicating that the red packet from the daughter has been opened by the father, and a specific opened amount is 10.12 CNY

Based on the solution in the foregoing embodiments, after the user minimizes the video call screen, the operation of opening the red packet can also be performed on the text message interface, and the text message interface and the video call screen can be synchronously changed.

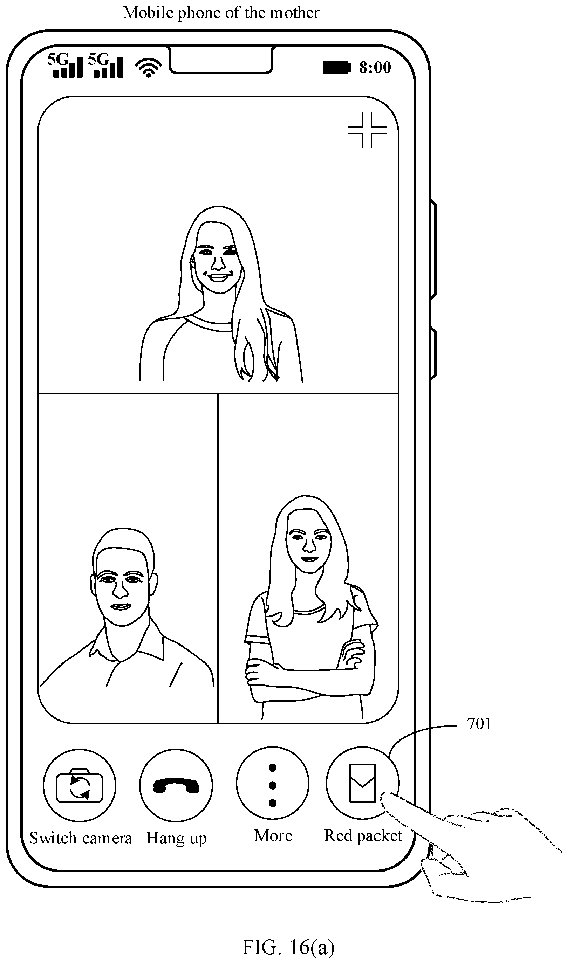

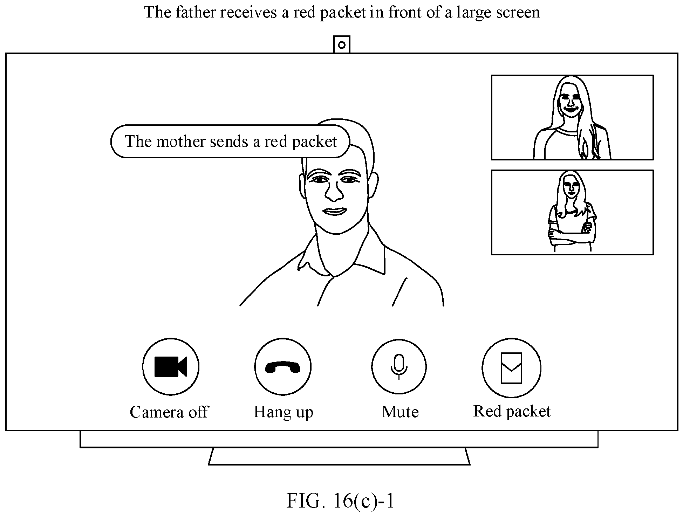

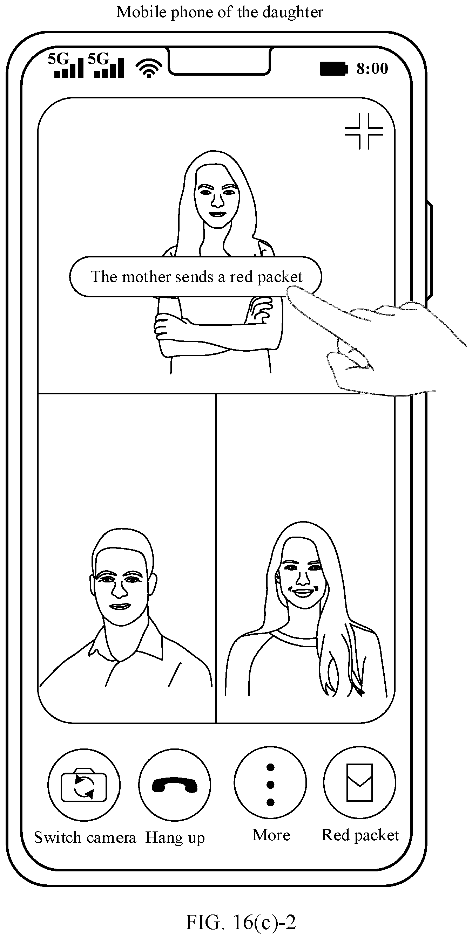

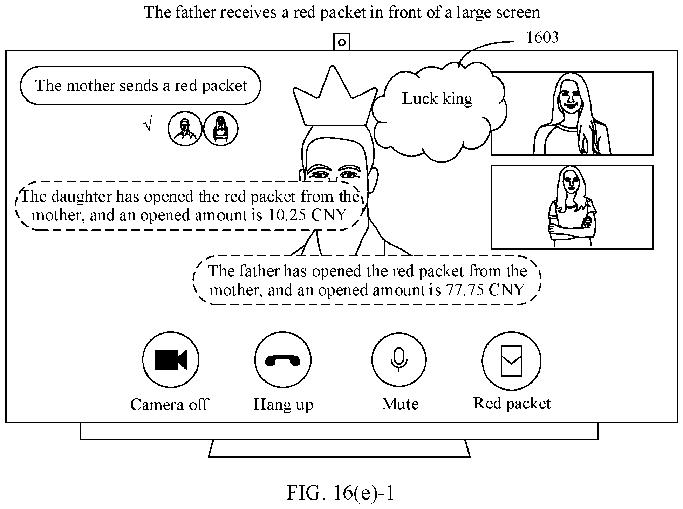

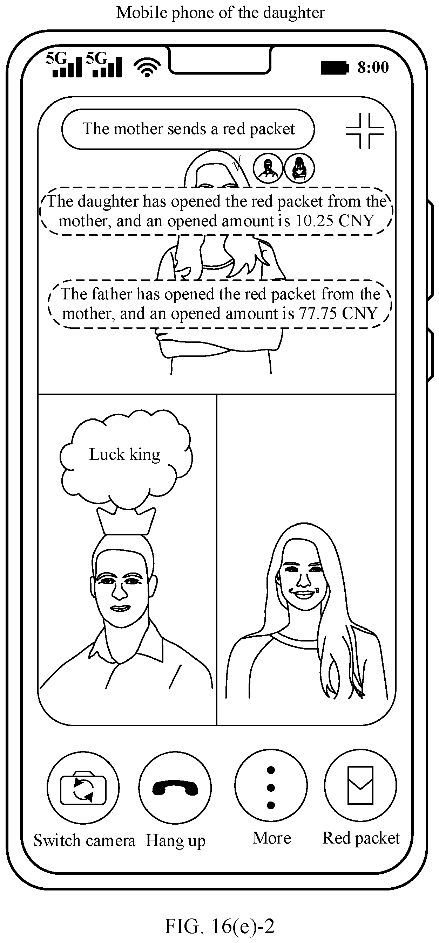

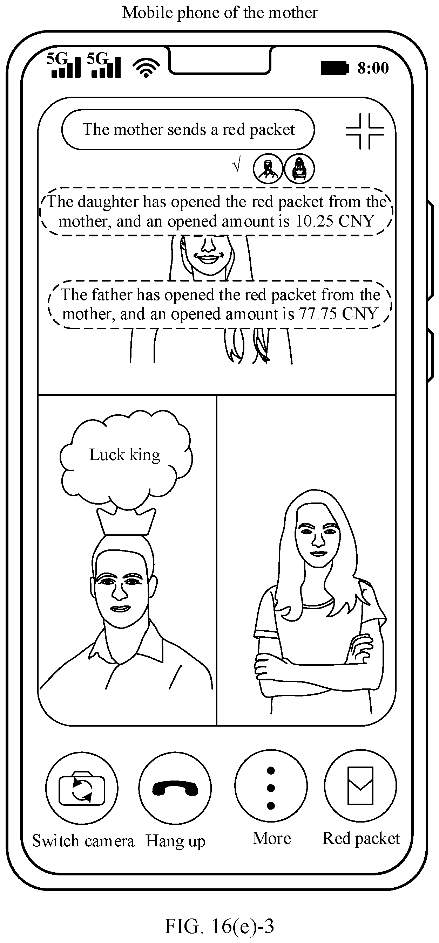

FIG. 16(a) to FIG. 16(e)-3 are another group of GUIs according to an embodiment of this application.

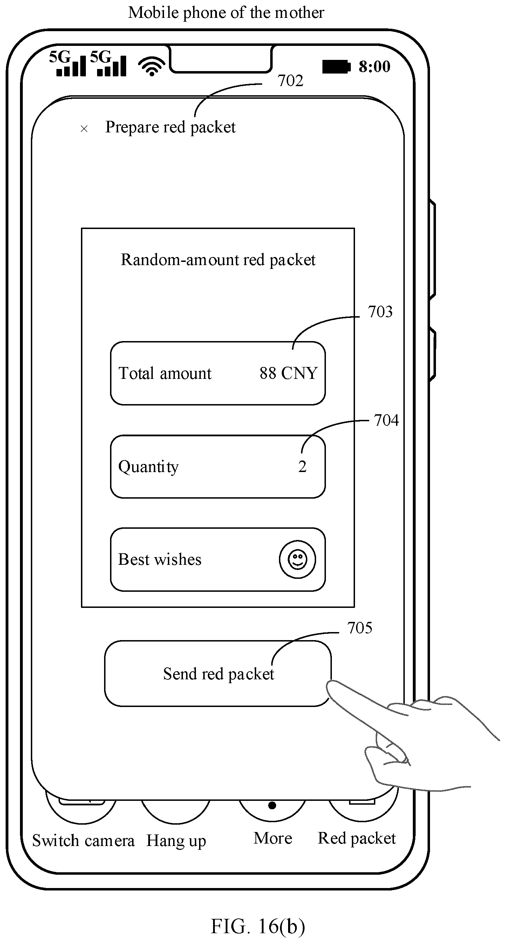

FIG. 16(a) is a screen on which the mother is performing the video call with the father and the daughter, and the red packet control 701 is at the bottom of the screen. In response to the operation of the user on the red packet control 701, the mobile phone may display a GUI shown in FIG. 16(b).

As shown in FIG. 16(b), in response to the operation of the user on the red packet control 701, the mobile phone may display the display interface of the red packet control. The red packet sending window 702 is displayed on the display interface. For example, the mother sends the random-amount red packet. The interface includes the input box 703 for the total amount, the input box 704 for the quantity of red packets, and the control 705 for sending the red packet. In response to the operation of the user on the control 705 for sending the red packet, the red packet may be sent. When the smart screen of the father receives the red packet message, the smart screen of the farther and the mobile phone of the daughter display GUIs shown in FIG. 16(c)-1 and FIG. 16(c)-2.

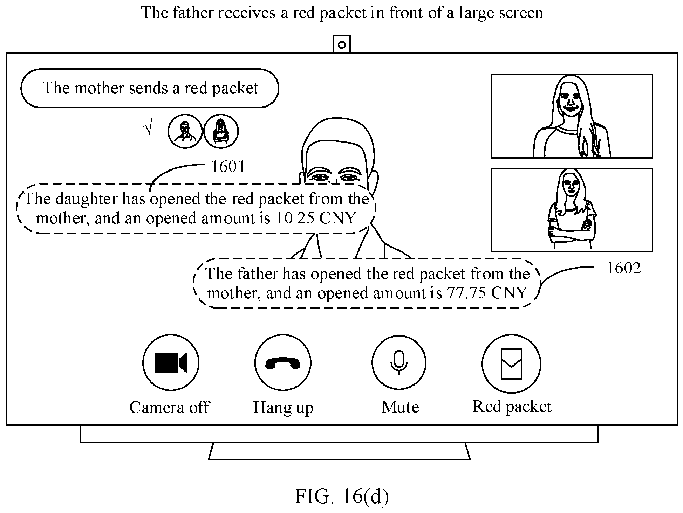

As shown in FIG. 16(c)-1 and FIG. 16(c)-2, the red packet message is displayed in the form of the red packet bullet comment. The father and daughter respectively receive the red packet on the smart screen and mobile phone. For example, when the cursor on the smart screen is located on the bullet comment, the father taps the OK button on the remote control, or sends a voice instruction to open the red packet, and the daughter directly taps the red packet bullet comment to open the red packet. In response to an operation of the user on the red packet bullet comment, the smart screen may display a GUI shown in FIG. 16(d).

As shown in FIG. 16(d), in response to the operation of the user on the red packet bullet comment, red packet opening detail bullet comments 1601 and 1602 are displayed on the video call screen of the smart screen of the father. For example, the red packet opening detail bullet comment 1601 displays that the daughter has opened the red packet sent by the mother and an opened amount is 10.25 CNY, and the red packet opening detail bullet comment 1602 displays that the father has opened the red packet from the mother and an opened amount is 77.75 CNY When the smart screen, the mobile phone of the daughter, and the mobile phone of the mother receive information indicating that the father has opened a maximum amount of the random-amount red packet, the smart screen, the mobile phone of the daughter, and the mobile phone of the mother may display GUIs shown in FIG. 16(e)-1 to FIG. 16(e)-3.

As shown in FIG. 16(e)-1 to FIG. 16(e)-3, in response to receiving information indicating that a user has opened a maximum amount of a red packet, a special effect icon 1603 may be displayed near a profile picture of the user. For example, when the smart screen of the father, the mobile phone of the daughter, and the mobile phone of the mother receive the information indicating that the father has opened the maximum amount of the random-amount red packet, on different electronic devices, a special effect icon "Luck king" is displayed near a profile picture of the father.

Based on the solution in the foregoing embodiments, interest of receiving/sending the red packet on the electronic device by the user can be enhanced, and interaction and communication between users can be increased.

It should be understood that, in the foregoing embodiments, the call screen of the electronic device not only includes the video call screen, but also may include a voice call screen. An operation of receiving/sending the red packet on the voice call screen is similar to that on the video call screen. For brevity, details are not described herein again.

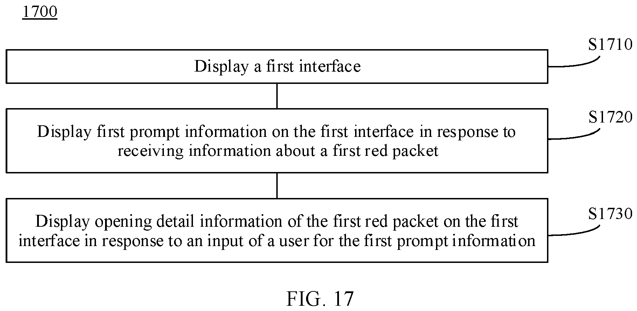

FIG. 17 is a schematic flowchart of a red packet receiving and sending method 1700 according to an embodiment of this application. As shown in FIG. 17, the method 1700 may be performed by an electronic device. The electronic device may be the foregoing first electronic device or the second electronic device that can independently complete receiving and sending processing, for example, a mobile phone, a smart screen, a tablet computer, or a smartwatch. The method 1700 includes the following steps.

S1710: An electronic device displays a first interface, where the first interface is a call screen.

Specifically, the call screen may be a video call screen or an audio call screen.

For example, as shown in FIG. 4(d), the mobile phone is displaying the video call screen, and the video call screen indicates that the user is in a group chat video call.

S 1720: The electronic device displays first prompt information on the first interface in response to receiving information about a first red packet, where the first prompt information is used to prompt a user to open the first red packet.

It should be understood that the information about the first red packet may be the red packet message mentioned in the foregoing embodiments, and the information about the first red packet includes one or more of logged-in account information (for example, a Huawei account) on a transmit end device, a red packet amount, a quantity of divided red packets, and a red packet blessing.

For example, the first prompt information may be a red packet opening window.

Optionally, the red packet opening window includes a red packet opening control, and the user may open the first red packet by tapping the red packet opening control.

Optionally, in response to receiving the information about the first red packet, and before displaying the red packet opening window on the first interface, the electronic device displays a red packet icon on the first interface. The user may tap the red packet icon to display the red packet opening window on the first interface. Based on the solution in the foregoing embodiments, when the user receives the red packet during a video call, the red packet may be displayed as a small red packet icon, and the red packet icon may be located in a lower right corner of the video call screen of the user, to prevent the video call screen of the user from being blocked, which affects user call experience.

Optionally, the red packet opening window includes a window closing control. In response to receiving the information about the first red packet, and before displaying the red packet icon on the first interface, the electronic device displays the red packet opening window on the first interface. The user may tap the window closing control on the red packet opening window to display the red packet icon on the first interface. If the user opens the red packet by tapping a red packet opening control before tapping the window closing control on the red packet opening window, when the user taps the window closing control again, the red packet icon may be displayed or may not be displayed on the first interface. Based on the solution in the foregoing embodiments, when the user receives the red packet during the video call, prompt information of the red packet can be directly displayed on a current interface, so that the user can open the red packet in time. Alternatively, the user may close a current red packet opening window, minimize the prompt information, and temporarily store the red packet, to prevent the call screen from being blocked by the red packet opening window.

It should be understood that the red packet icon may be an icon for minimized red packet opening windows, such as a red packet set, a red packet list, or a red packet surprise bag.

For example, the first prompt information may be a bullet comment, and the user opens the first red packet by tapping the bullet comment.

It should be understood that the electronic device may receive information about at least two red packets. When receiving information about a plurality of red packets, the electronic device may display, on the first interface, first prompt information that is in a one-to-one correspondence with the information about the plurality of red packets.

Optionally, when the first prompt information is the red packet opening window, and the electronic device receives a plurality of red packets, red packet opening windows of the plurality of red packets are displayed on the first interface. Specifically, the plurality of red packet opening windows may be displayed side by side from left to right, or may be displayed side by side from top to bottom. An arrangement form of the plurality of red packet opening windows is not limited in embodiments. The user selects from the plurality of red packet opening windows, and opens one or more of the plurality of red packets. A selection manner is not limited. For example, when the electronic device is a mobile phone, the user may select the red packet opening window through sliding left or right by using a finger; or when the electronic device is a smart screen, the user may select the red packet opening window by using a button of a remote control. When the user receives the plurality of red packets during the video call, a red packet opening window of a latest received red packet may be preferentially displayed. When the plurality of red packets include a red packet that has been opened and a red packet that has not been opened, the red packet that has not been opened may be preferentially displayed. The red packet opening window that is preferentially displayed is completely displayed, and a red packet opening window that is not preferentially displayed is partially displayed. Alternatively, the red packet opening window that is preferentially displayed is larger than a red packet opening window that is not preferentially displayed. Apreferred display form is not limited in embodiments of this application.

Optionally, when the first prompt information is the red packet bullet comment, and the electronic device receives a plurality of red packets, red packet bullet comments of the plurality of red packets are displayed on the first interface. Specifically, as shown in FIG. 14(a), a plurality of bullet comments may be displayed from left to right in a scrolling manner, and are periodically displayed in the scrolling manner during the video call. A bullet comment of a red packet that is not opened may continuously scroll on a current call screen, to remind the user that the red packet that is not opened still exists.

For example, there is a minimize control on the first interface, and when the user taps the minimize control, a floating window of the first interface is displayed on a second interface. The second interface may be a text message interface, a game interface, an office interface, or the like. This is not limited in embodiments.

Optionally, the electronic device receives information about a second red packet, where the second red packet may be a red packet other than the first red packet; the electronic device displays second prompt information on the first interface, where the second prompt information is used to prompt the user to open the second red packet; and after the user taps the minimize control on the first interface, the electronic device displays the floating window of the first interface and third prompt information on the second interface, where the second interface is the text message interface, and the third prompt information is used to prompt the user to open the second red packet on the text message interface. The third prompt information may be the icon 503 shown in FIG. 5(b), and the user may open the red packet by tapping the icon 503.

Optionally, after the user taps the minimize control on the first interface, the floating window of the first interface is displayed on the second interface, and the second interface is the text message interface. When receiving information about the second red packet, the electronic device displays prompt information on both the floating window of the first interface and the second interface. The user taps the prompt information on the second interface to open the red packet.

Optionally, the electronic device may be a plurality of electronic devices, and the plurality of electronic devices log in to a same account, which may be understood as a plurality of electronic devices of a same user. When one of the electronic devices receives the information about the first red packet sent by a server, the electronic device may send fourth prompt information to another surrounding electronic device, where the fourth prompt information indicates that the electronic device receives the information about the red packet. For example, as shown in FIG. 13(a) and FIG. 13(b), both the mobile phone and the smartwatch of the same account display the red packet message, and the user can open the red packet on the smartwatch. Based on the solution in the foregoing embodiments, when the user is near one of the electronic devices, the user can open the red packet by using the electronic device, so that the user can open the red packet conveniently and quickly.

S 1730: The electronic device displays opening detail information of the first red packet on the first interface in response to an input of the user for the first prompt information.

For example, the input of the user for the first prompt information may be in a manner of tapping a red packet control, tapping a bullet comment, shaking the electronic device, or tapping a button on a remote control. An input form is not limited in embodiments.

Optionally, the opening detail information of the first red packet includes information about an opened amount, account information for opening the red packet, and the like. When the first prompt information is the red packet opening window, the opening detail information is displayed in a window manner, as shown in FIG. 4(g). When the first prompt information is the bullet comment, the opening detail information is displayed in a bullet comment manner, as shown in FIG. 14(b). The bullet comment of the opening detail information may disappear after being repeatedly displayed once on a video interface, or the bullet comment of the comment detail information may be displayed only once or displayed more times, indicating an opened amount of a user.

Optionally, the opening detail information of the first red packet includes opening detail information of the first red packet by a first account, and the first account is a logged-in account on the electronic device. In other words, when a plurality of users perform a group chat, a user of the first account sends a red packet, and the plurality of users who perform the group chat may all open the red packet. The user (the first account) that sends the red packet may also open the red packet sent by the user, and the electronic device displays that the red packet has been opened by the first account.

Optionally, the electronic device displays fifth prompt information on the first interface in response to the input of the user for the first prompt information, where the fifth prompt information indicates opening detail information of the first red packet by a second account, and the second account is a logged-in account on another electronic device on which the first red packet is opened. In other words, the user of the first account sends the red packet, and other users can all open the red packet. The electronic device displays that the red packet has been opened by the second account.

Optionally, the electronic device displays sixth prompt information on the first interface in response to the input of the user for the first prompt information, where the sixth prompt information indicates information about an account with a highest opened amount of the first red packet. As shown in FIG. 16(e)-1 to FIG. 16(e)-3, on the video call screen of the group chat, the opened amount of the red packet by the father is the highest, and the "Luck king" icon is displayed near the profile picture of the father.

The foregoing embodiments may be used separately, or may be used in combination to implement different technical effects.

In embodiments provided in this application, the method provided in embodiments of this application is described from a perspective of the electronic device as an execution body. To implement functions in the methods provided in embodiments of this application, the electronic device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

An embodiment of this application further provides an electronic device, including a display, a processor, a memory, a power button, an application, and a computer program. The foregoing components may be connected by using one or more communication buses. The one or more computer programs are stored in the memory and are configured to be executed by the one or more processors. The one or more computer programs include instructions, and the instructions may be used to enable the electronic device to perform the steps of the red packet receiving and sending method in the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In embodiments, functional modules of the electronic device may be obtained through division based on the foregoing method examples. For example, each functional module may be obtained through division in correspondence to each function, or two or more functions may be integrated into one processing module. The integrated module may be implemented in a form of hardware. It should be noted that, division into the modules in embodiments is an example and is merely logical function division, and may be other division in an actual implementation.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A red packet receiving and sending method, wherein the method is applied to an electronic device, and the method comprises:
displaying a first interface, wherein the first interface is a call screen;
displaying first prompt information on the first interface in response to receiving information about a first red packet, wherein the first prompt information is used to prompt a user to open the first red packet; and
displaying opening detail information of the first red packet on the first interface in response to an input of the user for the first prompt information.

2. The method according to claim 1, wherein the first prompt information comprises a red packet opening window, and the red packet opening window comprises a red packet opening control; and
the displaying opening detail information of the first red packet on the first interface in response to an input of the user for the first prompt information comprises:
displaying the opening detail information of the first red packet on the first interface in response to an input of the user for the red packet opening control.

3. The method according to claim 2, wherein before the displaying first prompt information on the first interface, the method further comprises:
displaying a red packet icon on the first interface in response to receiving the information about the first red packet; and
displaying the red packet opening window on the first interface in response to an input of the user for the red packet icon.

4. The method according to claim 3, wherein the displaying a red packet icon on the first interface in response to receiving the information about the first red packet comprises:
displaying the red packet opening window on the first interface in response to receiving the information about the first red packet, wherein the red packet opening window comprises a window closing control; and
displaying the red packet icon on the first interface in response to an input of the user for the window closing control.

5. The method according to claim 1, wherein the first prompt information comprises a bullet comment; and
the displaying opening detail information of the first red packet on the first interface in response to an input of the user for the first prompt information comprises:
displaying the opening detail information of the first red packet on the first interface in response to an input of the user for the bullet comment.

6. The method according to any one of claims 1 to 5, wherein the first interface comprises a minimize control, and the method further comprises:
displaying second prompt information on the first interface in response to receiving information about a second red packet, wherein the second prompt information is used to prompt the user to open the second red packet;
displaying a floating window of the first interface and third prompt information on a second interface in response to an input of the user for the minimize control, wherein the second interface is a text message interface, and the third prompt information is used to prompt the user to open the second red packet; and
displaying opening detail information of the second red packet on the second interface and the floating window in response to an input of the user for the second prompt information or the third prompt information.

7. The method according to any one of claims 1 to 6, wherein the method further comprises:
sending, by the electronic device in response to receiving the information about the first red packet, fourth prompt information to a device associated with the electronic device, wherein the fourth prompt information indicates that the electronic device receives the information about the red packet.

8. The method according to any one of claims 1 to 7, wherein the opening detail information of the first red packet comprises opening detail information of the first red packet by a first account, and the first account is a logged-in account on the electronic device.

9. The method according to any one of claims 1 to 8, wherein the method further comprises:
displaying fifth prompt information on the first interface, wherein the fifth prompt information indicates opening detail information of the first red packet by a second account, and the second account is a logged-in account on another electronic device on which the first red packet is opened.

10. The method according to any one of claims 1 to 9, wherein the method further comprises:
displaying sixth prompt information on the first interface, wherein the sixth prompt information indicates information about an account with a highest opened amount of the first red packet.

11. The method according to any one of claims 1 to 10, wherein the opening detail information of the first red packet comprises information about an opened amount of the first red packet.

12. An electronic device, comprising:
one or more processors; and
one or more memories, wherein
the one or more memories store one or more computer programs, the one or more computer programs comprise instructions, and when the instructions are executed by the one or more processors, the electronic device is enabled to perform the following steps:
displaying a first interface, wherein the first interface is a call screen;
displaying first prompt information on the first interface in response to receiving information about a first red packet, wherein the first prompt information is used to prompt a user to open the first red packet; and
displaying opening detail information of the first red packet on the first interface in response to an input of the user for the first prompt information.

13. The electronic device according to claim 12, wherein the first prompt information comprises a red packet opening window, and the red packet opening window comprises a red packet opening control; and
when the instructions are executed by the one or more processors, the electronic device is enabled to perform the following step:
displaying the opening detail information of the first red packet on the first interface in response to an input of the user for the red packet opening control.

14. The electronic device according to claim 13, wherein when the instructions are executed by the one or more processors, the electronic device is enabled to perform the following steps:
before displaying a red packet icon on the first interface, displaying a red packet icon on the first interface in response to receiving the information about the first red packet; and
displaying the red packet opening window on the first interface in response to an input of the user for the red packet icon.

15. The method according to claim 14, wherein the displaying a red packet icon on the first interface in response to receiving the information about the first red packet, and when the instructions are executed by the one or more processors, the electronic device is enabled to perform the following steps:
displaying the red packet opening window on the first interface in response to receiving the information about the first red packet, wherein the red packet opening window comprises a window closing control; and
displaying the red packet icon on the first interface in response to an input of the user for the window closing control.

16. The electronic device according to claim 12, wherein the first prompt information comprises a bullet comment; and
when the instructions are executed by the one or more processors, the electronic device is enabled to perform the following step:
displaying the opening detail information of the first red packet on the first interface in response to an input of the user for the bullet comment.

17. The electronic device according to any one of claims 12 to 16, wherein the first interface comprises a minimize control, and when the instructions are executed by the one or more processors, the electronic device is enabled to perform the following steps:
displaying second prompt information on the first interface in response to receiving information about a second red packet, wherein the second prompt information is used to prompt the user to open the second red packet;
displaying a floating window of the first interface and third prompt information on a second interface in response to an input of the user for the minimize control, wherein the second interface is a text message interface, and the third prompt information is used to prompt the user to open the second red packet; and
displaying opening detail information of the second red packet on the second interface and the floating window in response to an input of the user for the second prompt information or the third prompt information.

18. The electronic device according to any one of claims 12 to 17, wherein when the instructions are executed by the one or more processors, the electronic device is enabled to perform the following step:
sending, in response to receiving the information about the first red packet, fourth prompt information to a device associated with the electronic device, wherein the fourth prompt information indicates that the electronic device receives the information about the red packet.

19. The electronic device according to any one of claims 12 to 18, wherein the opening detail information of the first red packet comprises opening detail information of the first red packet by a first account, and the first account is a logged-in account on the electronic device.

20. The electronic device according to any one of claims 12 to 19, wherein when the instructions are executed by the one or more processors, the electronic device is enabled to perform the following step:
displaying fifth prompt information on the first interface, wherein the fifth prompt information indicates opening detail information of the first red packet by a second account, and the second account is a logged-in account on another electronic device on which the first red packet is opened.

21. The electronic device according to any one of claims 12 to 20, wherein when the instructions are executed by the one or more processors, the electronic device is enabled to perform the following step:
displaying sixth prompt information on the first interface, wherein the sixth prompt information indicates information about an account with a highest opened amount of the first red packet.

22. The electronic device according to any one of claims 12 to 21, wherein the opening detail information of the first red packet comprises information about an opened amount of the first red packet.

23. A computer-readable storage medium, comprising computer instructions, wherein when the computer instructions are run on an electronic device, the electronic device is enabled to perform the red packet receiving and sending method according to any one of claims 1 to 11.

24. A computer program product comprising instructions, wherein when the computer program product runs on a computer, the computer is enabled to perform the red packet receiving and sending method according to any one of claims 1 to 11.
